# EUROPÄISCHE PATENTSCHRIFT

(11) **EP 2 757 006 B1**
(45) Veröffentlichungstag und Bekanntmachung des Hinweises auf die Patenterteilung: **07.02.2018**
(21) Anmeldenummer: 14151099.0
(22) Anmeldetag: 14.01.2014
(51) Int. Cl.: B60T 7/20, B60T 13/26, B60G 17/052, B60T 15/22, B60T 15/18

(54) **Ventileinrichtung für eine Druckluftanlage eines Anhängers eines Nutzfahrzeugs**
Valve device for a compressed air system of a trailer of a commercial vehicle
Système de soupape pour une installation d'air comprimé d'une remorque de véhicule utilitaire

(30) Priorität: 18.01.2013 DE 102013100541
(43) Veröffentlichungstag der Anmeldung: 23.07.2014
(73) Patentinhaber: Haldex Brake Products Aktiebolag, 261 24 Landskrona (SE)
(72) Erfinder: Sulzyc, Georg, 68305 Mannheim (DE)
(74) Vertreter: REHBERG HÜPPE + PARTNER

(56) Entgegenhaltungen:
- DE-A1-102007 002 020
- DE-B3-102005 019 479
- DE-B3-102007 053 766

## Beschreibung

### TECHNISCHES GEBIET DER ERFINDUNG

Die Erfindung betrifft eine Ventileinrichtung für eine Druckluftanlage eines Anhängers eines Nutzfahrzeugs mit einem Anhängerbremsventil.

### STAND DER TECHNIK

Bekannte Druckluftanlagen von Anhängern eines Nutzfahrzeugs verfügen über eine Ventileinrichtung, die mit einem manuell betätigbaren Parkventil sowie einem manuell betätigbaren Löseventil gebildet ist. Über das Parkventil und das Löseventil kann manuell, insbesondere zur Ermöglichung eines Rangierens des Anhängers in einer Notbremssituation und/oder für abgekuppelten Anhänger, eine Bremswirkung über eine Betriebsbremse bzw. eine Federspeicherbremse des Anhängers herbeigeführt und beseitigt werden. Darüber hinaus verfügen derartige Ventileinrichtungen über ein Anhängerbremsventil, welches auch als Notbremsventil bezeichnet wird oder ein solches aufweist und welches die Beaufschlagung einer Betriebsbremse in Abhängigkeit von einem Druck an einem mit dem Kupplungskopf Vorrat verbindbaren Anschluss steuert. Beispielsweise kann die Betriebsbremse über das Notbremsventil automatisch betätigt werden, wenn der Kupplungskopf Vorrat von einem Gegen-Kupplungskopf eines Zugfahrzeugs auf einem Betriebshof abgekoppelt wird oder der Kupplungskopf Vorrat in einer Notbremssituation während des Fahrbetriebs abreißt.

EP 1 188 634 B1 offenbart eine Ventileinrichtung mit einem Löseventil, einem Anhängerbremsventil und einem Parkventil. Das Anhängerbremsventil besitzt einen Anschluss für einen Kupplungskopf Bremse, einen Anschluss für eine Bremssteuerleitung, welcher über eine Steuereinheit in Form eines EBS-Modulators mit den Betriebsbremsen verbunden ist, einen Anschluss für ein Parkventil, einen Anschluss für einen Behälter sowie zwei mit dem Löseventil verbundene Anschlüsse, die in der Druckschrift als Versorgungsanschluss und als Löseanschluss bezeichnet sind. In dem Anhängerbremsventil ist ein Notbremsventil eingesetzt. Je nach Druckbeaufschlagung eines Steuerraums des Notbremsventils, welcher bei Löseventil in der Stellung "Fahrt" mit dem Kupplungskopf Vorrat verbunden ist, nimmt das Notbremsventil eine Normalbetriebsstellung ein (druckbeaufschlagter Kupplungskopf Vorrat) oder eine Notbremsstellung ein (druckloser Kupplungskopf Vorrat). In der Normalbetriebsstellung leitet das Notbremsventil den Druck an dem Anschluss, der mit dem Kupplungskopf Bremse verbunden ist, durch an den Anschluss, der über den EBS-Modulator mit den Betriebsbremsen verbunden ist. Somit kann über das Bremspedal und den über den Kupplungskopf Bremse übertragenen Bremssteuerdruck in der Normalbetriebsstellung die Beaufschlagung der Betriebsbremsen vom Fahrer vorgegeben werden. Darüber hinaus ist über das Anhängerbremsventil der mit dem Behälter verbundene Anschluss über ein integriertes Rückschlagventil mit dem mit dem Parkventil verbundenen Anschluss verbunden. In Öffnungsrichtung des Rückschlagventils kann Druckluft aus dem Behälter über das Anhängerbremsventil zu dem Parkventil gelangen. Befindet sich das Parkventil in der Löse- oder Fahrtstellung, kann die dem Behälter entstammende Druckluft dazu genutzt werden, um die Federspeicherbremsen zu lösen. In der Normalbetriebsstellung des Notbremsventils sperrt das Notbremsventil eine das Rückschlagventil umgehende Bypassleitung. Kommt es insbesondere bei einer intensiven modulierten Bremsung über die Betriebsbremse mit einem hohen Druckluftverbrauch zu einer Reduzierung des Drucks in dem Behälter, wird eine Reduktion des Druckes in einer Federspeicherkammer der Federspeicherbremsen durch eine Rückströmung in Richtung des Behälters unterbunden durch das in diese Rückströmrichtung sperrende Rückschlagventil, wenn gleichzeitig die Bypassleitung gesperrt ist. Kommt es hingegen zu einem Abriss der Vorratsleitung, nimmt das Notbremsventil automatisch die Notbremsstellung ein. In dieser Notbremsstellung wird die Bremssteuerleitung gegenüber dem Kupplungskopf Vorrat abgesperrt. Vielmehr wird der mit dem EBS-Modulator und den Betriebsbremsen verbundene Anschluss des Anhängersteuerventils über das Notbremsventil mit dem mit dem Behälter verbundenen Anschluss verbunden, womit eine Abbremsung des Fahrzeugs über die Betriebsbremse erfolgt, was unter EBS-Modulation erfolgen kann. Gleichzeitig öffnet das Notbremsventil die das Rückschlagventil umgehende Bypassleitung, was zur Folge hat, dass der Druck in den Federspeicherkammern der Federspeicherbremse dem (unter Umständen sinkenden) Druck in dem Behälter entspricht. Eine nachlassende Betriebsbremswirkung mit abnehmendem Druck in dem Behälter wird somit ausgeglichen durch eine zunehmende Entlüftung der Federspeicherkammern auf das Druckniveau des Behälters. Das Notbremsventil gemäß EP 1 188 634 B1 ist in Schieberbauart ausgebildet.

Auch gemäß DE 103 35 717 B4 nimmt ein Notbremsventil für hinreichenden Druck an einem Kupplungskopf Vorrat eine Normalbetriebsstellung ein, in welcher das Notbremsventil einen Kupplungskopf Vorrat mit einer hier über ein Relaisventil geführten Bremssteuerleitung verbindet. Kommt es zu einem Druckabfall an dem Kupplungskopf Vorrat, wird die Verbindung zwischen dem Kupplungskopf Bremse und der Bremssteuerleitung geschlossen. Gleichzeitig wird über das Notbremsventil der Behälter mit der Bremssteuerleitung verbunden, wodurch eine Notbremsung über die Betriebsbremse des Kombi-Bremszylinders ausgelöst wird. Während in der Normalbetriebsstellung des Notbremsventils der Druck in einer Federspeicherbremskammer durch ein Rückschlagventil gesichert ist gegenüber unerwünschten Druckeinbrüchen, insbesondere bei intensiven ABS- oder EBS-Bremsungen, wird mit Überführung eines Notbremskolbens des Notbremsventils bewegungsgesteuert das Rückschlagventil in eine Öffnungsstellung überführt, womit auch eine Verbindung zwischen dem Behälter und der Federspeicherkammer geschaffen wird. Auch hier erfolgt für einen Druckabfall in dem Behälter ein automatisierter Ausgleich eines Abfalls der Bremskraft an der Betriebsbremse durch eine zunehmende Entlüftung der Federspeicherbremskammern auf das sich verringernde Druckniveau des Behälters.

Auch DE 10 2007 053 765 A1 offenbart eine Ventileinrichtung mit einem Löseventil, einem Anhängerbremsventil mit integriertem Notbremsventil sowie einem Parkventil. Ein den Druck in den Federspeicherbremskammern sicherndes Rückschlagventil wird hier entsprechend DE 103 35 717 B4 bewegungsgesteuert mit der Bewegung des Notbremskolbens in die Notbremsstellung geöffnet. Das Parkventil ist mit einem Betätigungskolben ausgebildet. Der Betätigungskolben ist über eine Feder beaufschlagt. Über den Betätigungskolben wird der Ventilschieber des Parkventils grundsätzlich in die Parkstellung überführt, wobei der Betätigungskolben ausschließlich in Richtung dieser Parkstellung Kräfte auf den Ventilschieber ausüben kann. Hierzu ist der Betätigungskolben lediglich einseitig wirkend über eine Anlagefläche mit dem Ventilschieber gekoppelt. Auf der der Feder gegenüberliegenden Seite wird der Betätigungskolben beaufschlagt mit dem Druck an dem Kupplungskopf Vorrat. Für hinreichenden Druck an dem Kupplungskopf Vorrat bewegt sich der Betätigungskolben von dem Anschlag des Ventilschiebers weg. Für derartige Aufhebung der Kopplung zwischen Betätigungskolben und Ventilschieber kann das Parkventil manuell in die Parkstellung oder die Lösestellung überführt werden. Im Fahrbetrieb des Anhängers mit dem Parkventil in der Lösestellung führt ein Druckeinbruch an dem Kupplungskopf Vorrat dazu, dass der Betätigungskolben über die Feder in Richtung des Ventilschiebers bewegt wird und den Ventilschieber durch die einseitige Kopplung von der Lösestellung in die Parkstellung überführt. Dies hat zur Folge, dass ein Anschluss des Parkventils entlüftet wird. Dieser Anschluss des Parkventils ist verbunden mit einem Eingang eines Wechselventils, dessen anderer Eingang verbunden ist mit der Bremssteuerleitung ausgangsseitig des Anhängerbremsventils, welche hier mit einem Steueranschluss einer EBS-Steuereinheit verbunden ist. Der Ausgang des Wechselventils ist mit der Federspeicherbremskammer verbunden. Für hinreichenden Druck in der Bremssteuerleitung in einer Notbremssituation erfolgt die Herbeiführung der Notbremswirkung ausschließlich über die Beaufschlagung der Betriebsbremskammer über die EBS-Steuerleitung, während der überwiegende Druck der Bremssteuerleitung an dem Eingang des Wechselventils der Federspeicherbremskammer zugeführt wird, welcher größer ist als der Lösedruck der Federspeicherbremse. Kommt es zu einem Abfall des Drucks in dem Behälter, sinkt die über die EBS-Steuereinheit ausgesteuerte Bremswirkung der Betriebsbremskammer, während automatisch eine Entlüftung der Federspeicherbremskammer auf das Druckniveau der Bremssteuerleitung über das Wechselventil erfolgt mit sukzessiver Übernahme der Notbremskraft durch die Federspeicherbremse.

Neben der Druckluftversorgung der Bremsanlage des Anhängers dient die Druckluftanlage des Anhängers auch einer Versorgung einer Luftfederungsanlage des Anhängers. In dieser besitzen die Tragachsen Luftfederbälge, deren Druckbeaufschlagung je nach Beladung des Anhängers über ein Niveauregelventil gesteuert wird. Zusätzlich kann eine Liftachse Einsatz finden, welche je nach Beladung bzw. Traglast an den Tragachsen aktiviert oder deaktiviert werden kann. Die Wirksamkeit der Liftachse wird gesteuert über ein Liftachsventil, welches die Druckbeaufschlagung der Luftfederbälge der Tragachsen einerseits und der Liftachse andererseits so steuert, dass möglichst eine gleichmäßige Verteilung der Achslasten erfolgt. Schließlich verfügt die Luftfederungsanlage optional über ein Hebe-Senk-Ventil, über welches manuell das Anheben oder Absenken des Anhängers erfolgen kann, insbesondere zwecks Anpassung des Niveaus des Anhängers an die Höhe einer Rampe, um eine Be- und Entladen des Anhängers zu ermöglichen.

DE 10 2005 019 479 B3 offenbart eine Ventileinrichtung, in welche ein Löseventil und eine Notbremseinrichtung integriert ist. Des Weiteren ist in die Ventileinrichtung ein Hebe-Senk-Ventil integriert, welches sowohl über einen Hebel willkürlich manuell betätigbar ist als auch durch elektrische Ansteuerung elektropneumatisch umschaltbar ist. Das Hebe-Senk-Ventil speist über einen Anschluss der Ventileinrichtung Luftfederbälge einer Luftfederungsanlage. Die Ventileinrichtung verfügt über Eingangsanschlüsse, welche mit dem Kupplungskopf Bremse und Kupplungskopf Vorrat verbunden sind, Anschlüsse für Federspeicherbremszylinder, einen Bremssteueranschluss für die Beaufschlagung eines pneumatischen Steueranschlusses einer EBS-Steuereinheit, einen Anschluss für einen Behälter, welcher über ein in die Ventileinrichtung integriertes Überströmventil mit Druckluft versorgt wird, und einen Eingangsanschluss und einen Ausgangsanschluss, zwischen welche ein im Bereich einer zugeordneten Achse angeordnetes Niveauregelventil zwischengeordnet ist.

DE 10 2007 002 020 A1 zeigt eine Druckluftanlage einerseits mit einem Anhängerbremsventil und andererseits mit einem Niveauregelventil und einem Hebe-Senk-Ventil.

Während gemäß DE 10 2007 002 020 A1 das Niveauregelventil mechanisch mit der zugeordneten Achse gekoppelt ist, betrifft weiterer Stand der Technik auch elektronisch angesteuerte Niveauregelventile oder Hebe-Senk-Ventile:
EP 0 520 148 B1 offenbart eine Luftfederungsanlage, in welcher eine als Vorratsbehälter ausgebildete Druckluftquelle über eine Niveauregelventileinheit und eine Hebe-Senk-Ventileinheit pneumatisch mit Luftfederbälgen verbunden ist. Die Niveauregelventileinheit wird automatisch durch mechanische Betätigung entsprechend einer Veränderung des Niveaus, also des Abstandes eines Fahrzeugaufbaus mit einem Fahrzeugrad oder einer Fahrzeugachse, in eine Belüftungsstellung, eine Sperrstellung oder eine Entlüftungsstellung gesteuert. Die Niveauregelventileinheit wird eingesetzt, um während des Fahrbetriebs eine Soll-Niveauhöhe vorzugeben und zu halten, was insbesondere unabhängig von einer Beladung, Längs- und Querbeschleunigungen beispielsweise bei Kurvenfahrt und Oszillationen, Unebenheiten und Neigungen der Fahrbahn erfolgen soll. Über die Hebe-Senk-Ventileinheit kann der Fahrer für ruhendes Fahrzeug willkürlich das Niveau verändern, also den Fahrzeugaufbau heben oder senken, was beispielsweise zur Anpassung an eine Rampe für Be- und Entladevorgänge erfolgen kann. Hierzu besitzt die Hebe-Senk-Ventileinheit einen Wählhebel, welcher mit einer Schaltwelle um eine Rotationsachse verschwenkt werden kann zwischen Schwenkstellungen Heben, Senken und Stopp. Die Schaltwelle trägt Nocken, über welche abhängig vom Rotationswinkel der Schaltwelle und des Wählhebels Stößel betätigt werden können, die wiederum Ein- und Auslassventile betätigen. In der Stellung Heben wird ein Einlassventil geöffnet, welches einen Anschluss der Hebe-Senk-Ventileinheit, der unter Umgehung der Niveauregelventileinheit mit der Druckluftquelle verbunden ist, mit einem Ausgang zu den Luftfederbälgen verbindet. Hingegen wird in der Stellung Senken ein Auslassventil geöffnet, welches den zu den Luftfederbälgen führenden Ausgang entlüftet. In der zwischen den Stellungen Heben und Senken angeordneten Stellung Stopp sind die zuvor genannten Einlass- und Auslassventile geschlossen, sodass der Druck in den Luftfederbälgen konstant gehalten wird. In der Hebe-Senk-Ventileinheit ist eine sogenannte Totmann-Feder eingesetzt werden, welche als Torsionsfeder ausgebildet ist. Die Totmann-Feder führt den Wählhebel mit Schaltwelle von einer manuell herbeigeführten Stellung Heben oder Senken zurück in die Stellung Stopp, wenn der Fahrer keine Kräfte mehr auf den Wählhebel aufbringt. Die Hebe-Senk-Ventileinheit besitzt darüber hinaus einen pneumatischen Steueranschluss, welcher in einen Druckraum mündet. Der Druckraum ist von einem Steuerkolben begrenzt, der durch eine Stirnseite der Schaltwelle gebildet ist. Durch Vorgabe eines pneumatischen Steuerdrucks in dem Druckraum kann eine Axialverschiebung der Schaltwelle mit Wählhebel herbeigeführt werden, welche zur Folge hat, dass bei geschlossenem Einlassventil und geschlossenem Auslassventil ein Verbindungsventil geöffnet wird. Für geöffnetes Verbindungsventil ist die Niveauregelventileinheit über die Hebe-Senk-Ventileinheit mit den Luftfederbälgen verbunden, sodass automatisch über die Niveauregelventileinheit der Druck in den Luftfederbälgen und damit letztendlich das Niveau geregelt werden kann. Die durch pneumatische Druckbeaufschlagung des Druckraums herbeigeführte Stellung entspricht einer Stellung Fahrt, welche über eine Steuereinheit mit entsprechender Ansteuerung eines Magnetventils und derart ausgesteuerten Steuerdruck automatisiert eingenommen wird, wenn sich das Fahrzeug in Bewegung setzt und beispielsweise eine Grenzgeschwindigkeit überschritten wird.

Gemäß EP 1 382 469 A2 sind zwischen eine Druckluftquelle und Luftfederbälge ein 2/2-Wegeventil in Ausbildung als Sperrventil sowie ein 3/2-Wegeventil in Ausbildung als Be- und Entlüftungsventil zwischengeschaltet. Hierbei können die beiden genannten Ventile sowohl über zugeordnete Elektromagnete elektrisch für eine elektrische Niveauregelung betätigt werden als auch manuell betätigt werden über jeweils einen den Ventilen zugeordneten Stößel, um manuell ein Heben oder Senken zu verursachen.

DE 199 44 873 C1 offenbart eine Luftfederungsanlage, bei welcher in parallelen Leitungszweigen in einem ersten Leitungszweig eine mechanisch angesteuerte Niveauregelventileinheit angeordnet ist und in einem zweiten Leitungszweig eine rein elektrisch angesteuerte Niveauregelventileinheit angeordnet ist. Die mechanische Niveauregelventileinheit in dem ersten Leitungszweig besitzt einen Niveausensor, dessen Ausgangssignal einer Steuereinheit zugeführt wird, welche, auch auf Grundlage dieses Niveausignals, die rein elektrisch angesteuerte Niveauregeventileinheit in dem anderen Leitungszweig ansteuert. Die Steuereinheit steuert auch ein in dem ersten Leitungszweig angeordnetes Sperrventil an, über welches dieser erste Leitungszweig absperrbar ist, wenn die rein elektronische Niveauregelung in den zweiten Leitungszweig erfolgt. In einer weiteren Ausführungsform dieser Druckschrift ist eine Druckluftquelle über ein mechanisches Niveauregelventil, eine Hebe-Senk-Ventileinheit, ein Wechselventil und eine rein elektrisch angesteuerte Niveauregelventileinheit mit Luftfederbälgen verbunden. Hier kann der Fahrer manuell Einfluss auf das Niveau der Luftfederungsanlage sowohl über die Hebe-Senk-Ventileinheit als auch über einen elektrischen Wahlschalter nehmen, über welchen ebenfalls ein manuell verursachtes Heben und Senken bei ordnungsgemäßer Spannungsversorgung über die rein elektronische Niveauregelventileinheit veranlasst werden kann.

Die Druckschrift DE 199 16 040 B4 offenbart eine Luftfederungsanlage, bei welcher zwischen die Druckluftquelle und die hier zweikreisigen Luftfederbälge eine Niveauregelventileinheit zwischengeschaltet ist. Die Ventile der Niveauregelventileinheit sind hierbei einerseits unmittelbar elektrisch über elektrische Steueranschlüsse der Ventile ansteuerbar. Zusätzlich kann die Ansteuerung der Niveauregelventileinheit pneumatisch über manuell betätigte Schaltventile erfolgen, die pneumatische Steuerdrücke erzeugen, welche pneumatischen Steueranschlüssen der Ventile der Niveauregelventileinheit zugeführt werden.

EP 1 687 159 B1 offenbart die parallele Anordnung eines ausschließlich elektrisch betätigten Leitungszweigs mit Niveauregelventilen, nämlich einem 3/2-Magnetventil mit einer Belüftungsstellung und einer Entlüftungsstellung sowie einem 2/2-Magnetventilin Ausbildung als Sperrventil, sowie eines Leitungszweigs mit zwei manuell betätigbaren Ventilen, nämlich einem 3/2-Wegeventil mit einer Belüftungsstellung und einer Entlüftungsstellung sowie einem 2/2-Wegeventil in Ausbildung als Sperrventil.

EP 2 070 741 B1 offenbart eine Hebe-Senk-Ventileinheit, die neben der manuellen Betätigung auch elektropneumatisch gesteuert von einer Durchlassstellung in eine Sperrstellung überführbar ist. Während für bewegtes Fahrzeug und Hebe-Senk-Ventileinheit in der Durchlassstellung die Niveauregelung aktiviert ist und somit ein Anheben, Konstanthalten und Absenken des Niveaus je nach Überführung des Niveauregelventils in eine Belüftungsstellung, Sperrstellung und Entlüftungsstellung möglich ist, wird durch automatisierte Umschaltung der Hebe-Senk-Ventileinheit in die Sperrstellung die automatische Niveauregelung deaktiviert. Diese Deaktivierung der Niveauregelung wird gezielt entsprechend einer Beschleunigung des Anhängers eingesetzt. Beispielsweise kann die Niveauregelung aktiviert werden, wenn es zu einem Nicken des Fahrzeugs bei einem Bremsvorgang oder zu Einfederungen infolge einer Querbeschleunigung bei einer Kurvenfahrt kommt. Würde keine Deaktivierung der Niveauregelung erfolgen, würden durch die jeweilige Beschleunigung verursachte Ein- und Ausfedervorgänge der Luftfederbälge zu unnötigen Niveauregelaktionen mit einem erhöhten Druckluftverbrauch führen.

DE 199 28 113 C1 offenbart eine Kopplung der Luftfederungsanlage einerseits mit der Bremsanlage andererseits, indem das Anhängerbremsventil einen pneumatischen Anschluss besitzt, welcher mit einem Luftfederbalg pneumatisch verbunden ist. Der Druck an dem genannten Anschluss wird über einen Drucksensor erfasst. Eine elektronische Steuereinheit passt je nach Drucksignal an dem genannten Anschluss und damit je nach Beladungszustand den an den Betriebsbremsen ausgesteuerten Betriebsbremsdruck an, was unmittelbar über eine ABS- oder EBS-Steuereinheit erfolgt.

DE 103 33 182 A1 offenbart ein elektronisches Achssteuergerät, welches einen Eingang besitzt, der mit einer Druckluftversorgung, insbesondere einem Druckluftbehälter, verbunden ist. Der Eingang des Achssteuergeräts ist in dem Achsteuergerät über ein erstes elektronisch angesteuertes Ventil des Achssteuergeräts verbunden mit einem Anschluss für eine Betriebsbremse. Das erste Ventil wird zur Gewährleistung einer ABS-Funktion von einer elektronischen Steuereinheit angesteuert, wobei die Steuersignale für das erste Ventil in Abhängigkeit des ermittelten Haftreibungsbeiwerts der Räder und des im Zugfahrzeug erzeugten Bremsdrucks ermittelt werden, wobei der Bremsdruck als proportionale elektronische Größe vom Zugfahrzeug übermittelt werden kann. In dem Achssteuergerät ist der Eingang über ein zweites elektronisch angesteuertes Ventil mit einem Anschluss für Luftfederbälge der zugeordneten Achse verbunden. Unter Berücksichtigung eines gemessenen Federwegs und Innendrucks der Federbälge der zugeordneten Achse werden die Steuerbefehle für das zweite Ventil ermittelt. Mit dem derart ausgebildeten Achssteuergerät soll ein voll integriertes Achssystem geschaffen werden, welches einfach aufgebaut ist und ohne besondere Konfigurierung an den Rahmen des Aufliegers oder Anhängers montiert werden kann.

DE 10 2006 040 950 A1 offenbart eine Druckluftanlage, bei welcher ein Kupplungskopf Vorrat sowie ein Kupplungskopf Bremse mit einem Anhängerbremsventil und zugeordnetem Parkventil und Löseventil pneumatisch verbunden sind. Über das Anhängerbremsventil wird je nach an dem Kupplungskopf Bremse anliegenden Bremssteuerdruck ein entfernt angeordneter Modulator pneumatisch beaufschlagt. Der Modulator ist für die pneumatische Beaufschlagung der Kombi-Bremszylinder zuständig. Darüber hinaus besitzt der Modulator einen Anschluss für einen Vorratsbehälter, ein Luftfederventil, ein Hebe-Senk-Ventil sowie ein Liftachsventil.

DE 199 28 113 C1 offenbart ein Anhängerbremsventil, welches einen Anschluss besitzt, welchem der Druck eines Luftfederbalgs einer Luftfederungsanlage zugeführt wird. In das Anhängerbremsventil ist ein Sensor integriert, welcher den Druck an diesem Anschluss, also den Druck in dem Luftfederbalg, sensiert. Das Drucksignal des Sensors wird einer Steuerelektronik zugeführt, womit eine lastabhängige Beaufschlagung der Betriebsbremsen erfolgen kann.

### AUFGABE DER ERFINDUNG

Der vorliegenden Erfindung liegt die Aufgabe zugrunde, eine Druckluftanlage für einen Anhänger eines Nutzfahrzeugs mit verändertem Aufbau, insbesondere einem erhöhten Integrationsgrad, vorzuschlagen.

### LÖSUNG

Die Aufgabe der Erfindung wird erfindungsgemäß mit dem Merkmal des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Erfindungsgemäß wird eine Ventileinrichtung vorgeschlagen, welche für eine Druckluftanlage eines Anhängers eines Nutzfahrzeugs bestimmt ist. Im Sinne der Erfindung wird unter einer Ventileinrichtung eine singuläre Baueinheit verstanden. Hierbei kann die singuläre Baueinheit mit einem einzigen gemeinsamen (ein- oder mehrteiligen) Gehäuse gebildet sein. Ebenfalls möglich ist, dass die singuläre Baueinheit als ein Gesamtmodul ausgebildet ist, welches mit mehreren starr miteinander verbundenen, insbesondere aneinander angeflanschten, Teilmodulen gebildet ist, wobei in diesem Fall dann das Gehäuse der Ventileinrichtung mit mehreren, von den Teilmodulen gebildeten Teilgehäusen gebildet ist.

Gemäß dem eingangs genannten Stand der Technik sind in der Druckluftanlage eingesetzte Ventileinrichtungen entweder für die Luftfederungsanlage oder für die Bremsanlage zuständig. Erfindungsgemäß wird erstmals eine Ventileinrichtung geschaffen, welche sowohl einen Bestandteil der Bremsanlage als auch einen Bestandteil der Luftfederungsanlage beinhaltet: Erfindungsgemäß verfügt die Ventileinrichtung über ein Anhängerbremsventil mit integrierter pneumatisch gesteuerter Notbremsfunktion. Darüber hinaus ist in die Ventileinrichtung mindestens ein einer Luftfederungsanlage des Anhängers zugeordnetes Ventil integriert. Durch diese Integration kann eine kompakte, multifunktionale Ventileinrichtung geschaffen werden, womit auch der Aufbau der Druckluftanlage des Anhängers des Nutzfahrzeugs vereinfacht werden kann und kompakt gestaltet werden kann. Unter Umständen reduziert sich durch die erfindungsgemäße Ausgestaltung auch ein Montageaufwand bei der Montage der Druckluftanlage. Auch möglich ist, dass der Aufwand für Leitungsverbindungen, insbesondere pneumatische Leitungsverbindungen, durch die erfindungsgemäße Ausgestaltung reduziert wird.

Bei dem der Luftfederungsanlage des Anhängers zugeordneten Ventil kann es sich um ein Ventil beliebiger Bauart handeln.

Erfindungsgemäß ist in die Ventileinrichtung ein Parkventil integriert oder die Ventileinrichtung besitzt einen Anschluss für ein Parkventil.

Erfindungsgemäß ist das in die Ventileinrichtung integrierte Ventil, welches der Luftfederungsanlage des Anhängers zugeordnet ist, ein Niveauregelventil. Erfindungsgemäß handelt es sich bei dem Niveauregelventil um ein direkt elektronisch gesteuertes Niveauregelventil oder ein elektronisch vorgesteuertes Niveauregelventil.

Zusätzlich möglich ist, dass es sich bei dem in die Ventileinrichtung integrierten Ventil um ein Liftachsventil handelt, welches vorzugsweise direkt elektronisch gesteuert ist oder elektronisch vorgesteuert ist.

In kumulativer Ausgestaltung schlägt die Erfindung vor, dass das in die Ventileinrichtung integrierte Ventil ein Überströmventil oder Kreisschutzventil für die Luftfederungsanlage des Anhängers ist. Dieses kann beispielsweise dafür sorgen, dass ein Übertritt von Druckluft zu den Luftfederbälgen erst möglich ist, wenn ein Öffnungsdruck des Überströmventils überschritten wird. Ebenfalls möglich ist, dass ein Überströmventil mit begrenzter Rückströmung Einsatz findet, so dass in Teilbetriebsbereichen auch Druckluft aus den Luftfederbälgen über das Überströmventil anderen Bestandteilen der Druckluftanlage des Anhängers zur Verfügung gestellt werden kann. In diesem Fall kann ein Schließdruck für die Rückströmung des Überströmventils dafür verantwortlich sein, dass ein Mindestdruck in den Luftfederbälgen aufrechterhalten bleibt.

In weiterer Ausgestaltung der Erfindung übernimmt die Ventileinrichtung auch eine weitere Funktion: Gemäß dieser Ausgestaltung ist in die Ventileinrichtung eine elektronische Steuereinheit integriert. Diese elektronische Steuereinheit steuert direkt oder mittels Vorsteuerung das mindestens eine in die Ventileinrichtung integrierte Ventil, welches der Luftfederungsanlage zugeordnet ist, an. Somit bildet für diese Ausgestaltung die Ventileinrichtung eine besonders kompakte Einheit, welche unmittelbar die Steuerungsfunktion zumindest für einen Teil der Luftfederungsanlage übernehmen kann.

Möglich ist, dass die vorgenannten elektronische Steuereinheit ausschließlich für das mindestens eine Ventil der Luftfederungsanlage zuständig ist. Weitere elektronische Steuereinheiten können dann innerhalb oder außerhalb der Ventileinrichtung angeordnet sein. Eine multifunktionale Nutzung der elektronischen Steuereinheit ergibt sich für eine weitere Ausgestaltung der Erfindung, für welche die genannte elektronische Steuereinheit neben der Ansteuerung des der Luftfederungsanlage zugeordneten mindestens einen Ventils auch die ABS- oder EBS-Steuereinheit ausbildet und somit für die Aussteuerung und Modulation des Bremssteuerdrucks für die Betriebsbremse zuständig ist.

Eine weitere Lösung der der Erfindung zugrundeliegenden Aufgabe ist gegeben durch eine Druckluftanlage eines Anhängers eines Nutzfahrzeugs, in welcher eine Ventileinrichtung der zuvor erläuterten Art Einsatz findet. Zusätzlich ist eine außerhalb der Ventileinrichtung angeordnete elektronische Steuereinheit vorhanden. Diese zusätzliche elektronische Steuereinheit steuert (direkt oder mittels Vorsteuerung) das oder mindestens ein in die Ventileinrichtung integrierte(s) Ventil, welches der Luftfederungsanlage zugeordnet ist, an. Somit wird die Ventileinrichtung zumindest hinsichtlich einer Funktion der Luftfederungsanlage extern angesteuert.

Die externe elektronische Steuereinheit kann ausschließlich der Ansteuerung des in die Ventileinrichtung integrierten mindestens einen Ventils dienen. Durchaus möglich ist, dass diese externe elektronische Steuereinheit weiteren Zwecken dient. In besonderer Ausgestaltung der Erfindung ist die zusätzliche elektronische Steuereinheit als ABS- oder EBS-Steuereinheit ausgebildet, womit diese multifunktional ist und sowohl ein Ventil der Luftfederungsanlage als auch ein Ventil der Bremsanlage ansteuert oder einen u. U. modulierten Betriebsbremsdruck aussteuert.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt stark schematisiert eine nicht erfindungsgemäße Druckluftanlage eines Anhängers mit einer Beaufschlagung eines Steueranschlusses einer Steuereinheit für den Betriebsbremsdruck von einem Kupplungskopf Bremse über ein Notbremsventil.
- **Fig. 2**: zeigt stark schematisiert eine nicht erfindungsgemäße Druckluftanlage eines Anhängers.
- **Fig. 3**: zeigt stark schematisiert eine weitere nicht erfindungsgemäße Ausgestaltung einer Druckluftanlage.
- **Fig. 4**: zeigt eine weitere nicht erfindungsgemäße Ausgestaltung einer Druckluftanlage eines Anhängers mit einer Ventileinrichtung in schematischer Darstellung, wobei hier ein Kupplungskopf Vorrat drucklos ist.
- **Fig. 5**: zeigt die Druckluftanlage gemäß Fig. 4 für druckbeaufschlagten Kupplungskopf Vorrat, wobei hier ein Umschaltdruck eines Federspeicherventils überschritten ist, während ein Umschaltdruck eines Notbremsventils nicht überschritten ist.
- **Fig. 6**: zeigt die Druckluftanlage gemäß Fig. 4 und 5 mit druckbeaufschlagtem Kupplungskopf Vorrat, wobei hier sowohl der Umschaltdruck des Federspeicherventils als auch der Umschaltdruck des Notbremsventils überschritten ist.
- **Fig. 7**: zeigt eine nicht erfindungsgemäße Druckluftanlage mit einer Ventileinrichtung, bei welcher der Umschaltdruck des Federspeicherventils höher ist als der Umschaltdruck des Notbremsventils, wobei in der dargestellten Betriebsstellung der Umschaltdruck des Notbremsventils überschritten ist, während ein Umschaltdruck des Federspeicherventils nicht überschritten ist.
- **Fig. 8**: zeigt eine nicht erfindungsgemäße Druckluftanlage mit einer alternativen Ventileinrichtung, bei welcher eine Steuerfläche eines Ventilschiebers von dem Druck in einem Behälter der Druckluftanlage beaufschlagt ist.
- **Fig. 9**: zeigt eine nicht erfindungsgemäße Druckluftanlage mit einer alternativen Ventileinrichtung, in welcher die Druckbeaufschlagung der Steuerfläche des Ventilschiebers über ein Magnetventil steuerbar ist.
- **Fig. 10**: zeigt eine nicht erfindungsgemäße Druckluftanlage mit einer alternativen Ventileinrichtung, in welcher ein Ventilschieber mit einem Differentialkolben Einsatz findet.
- **Fig. 11**: zeigt eine nicht erfindungsgemäße Druckluftanlage mit einer Ventileinrichtung, in welcher ein Anhängerbremsventil Einsatz findet, dessen Gehäuse grundsätzlich entsprechend Fig. 4 bis 10 ausgebildet ist, wobei in dem Gehäuse aber kein Notbremsventil in dem vorhandenen Aufnahmeraum vorhanden ist.
- **Fig. 12**: zeigt eine nicht erfindungsgemäße Druckluftanlage mit einer Ventileinrichtung, bei welcher ein Gehäuse des Anhängerbremsventils grundsätzlich entsprechend Fig. 4 bis 11 ausgebildet ist, wobei aber in einem Aufnahmeraum für das Federspeicherventil kein Federspeicherventil vorhanden ist.
- **Fig. 13**: zeigt eine nicht erfindungsgemäße Druckluftanlage, bei welcher ein Steuereingang einer EBS-Steuereinheit nicht mit einem Ausgang der Ventileinrichtung verbunden ist.
- **Fig. 14**: zeigt eine nicht erfindungsgemäße Druckluftanlage mit einer Ventileinrichtung, bei welcher ein Gehäuse eines Anhängerbremsventils Einsatz findet, welches grundsätzlich entsprechend den Fig. 4 bis 13 ausgebildet ist, wobei aber in dem Aufnahmeraum für das Federspeicherventil kein Federspeicherventil angeordnet ist, und bei welcher ein Parkventil gemäß DE 10 2007 053 765 A1 und DE 10 2007 053 764 A1 eingesetzt ist.
- **Fig. 15**: zeigt den Einsatz einer nicht erfindungsgemäßen Ventileinrichtung, bei welcher ein Gehäuse eines Anhängerbremsventils Einsatz findet, welches grundsätzlich entsprechend den Fig. 4 bis 14 ausgebildet ist, wobei aber in dem Aufnahmeraum für das Federspeicherventil kein Federspeicherventil angeordnet ist, kein Parkventil vorhanden ist und keine Kombi-Bremszylinder verwendet werden.
- **Fig. 16**: zeigt eine nicht erfindungsgemäße Druckluftanlage mit einer erfindungsgemäßen Ventileinrichtung mit Funktionsschaltbildern der Ventile, wobei hier in die Ventileinrichtung mindestens ein Überströmventil für eine Luftfederungsanlage integriert ist.
- **Fig. 17**: zeigt eine Druckluftanlage mit einer erfindungsgemäßen Ventileinrichtung mit Funktionsschaltbildern der Ventile und mit integriertem Überströmventil und mit weiteren integrierten Ventilen für eine Luftfederungsanlage.
- **Fig. 18**: zeigt stark schematisiert eine Druckluftanlage mit einer erfindungsgemäßen Ventileinrichtung, über welche auch eine Beaufschlagung von Luftfederbälgen und eines Liftbalgs erfolgt.
- **Fig. 19**: zeigt eine mögliche Ausgestaltung der Druckluftanlage und einer erfindungsgemäßen Ventileinrichtung gemäß Fig. 17 oder 18 mit Funktionsschaltbildern der einsetzbaren Ventile.

### FIGURENBESCHREIBUNG

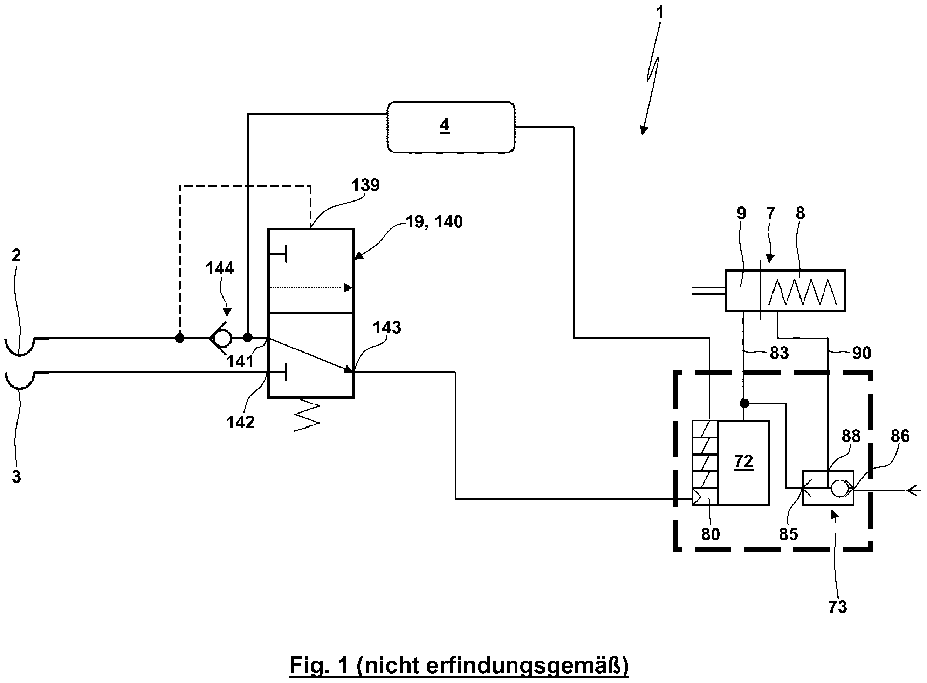

In einer Druckluftanlage 1 gemäß Fig. 1 ist ein Notbremsventil 19 eingesetzt, welches hier als pneumatisch über einen Steueranschluss 139 angesteuertes 3/2-Wegeventil 140 ausgebildet ist. Das Notbremsventil 19 besitzt eingangsseitig Anschlüsse 141, 142 sowie ausgangsseitig einen Anschluss 143. Der Anschluss 141 ist über ein in Richtung dieses Anschlusses 141 öffnendes Rückschlagventil 144 mit dem Kupplungskopf Vorrat 2 verbunden. Der Anschluss 142 ist unmittelbar mit dem Kupplungskopf Bremse 3 verbunden. Der ausgangsseitige Anschluss 143 ist unmittelbar mit einem Steueranschluss 80 einer Steuereinheit 72 verbunden. Von der Verbindungsleitung des Anschlusses 141 mit dem Kupplungskopf Vorrat 2 zweigt stromaufwärts des Rückschlagventils 144 die gestrichelt dargestellte, mit dem Steueranschluss 139 verbundene Steuerleitung ab. Zwischen dem Rückschlagventil 144 und dem Anschluss 141 zweigt von dieser Verbindungsleitung des weiteren eine Leitung ab, die mit einem Behälter 4 verbunden ist. Ohne Steuerdruck an dem Steueranschluss 139, also ohne Druck an dem Kupplungskopf Vorrat 2 (oder für einen nicht ausreichenden Druck) befindet sich angesichts der Beaufschlagung durch eine Feder das Notbremsventil 19 in der Fig. 1 wirksamen Schaltstellung. In dieser Schaltstellung verbindet das Notbremsventil 19 die Anschlüsse 141, 143 miteinander, während der Anschluss 142 abgesperrt ist. Bei an dem Kupplungskopf Vorrat 2 anliegendem Druck erfolgt eine Umschaltung des Notbremsventils 19 in die in Fig. 1 nicht wirksame Schaltstellung, in welcher das Notbremsventil 19 die Anschlüsse 142, 143 miteinander verbindet, während der Anschluss 141 abgesperrt ist.

Aus dem Behälter 4 erfolgt wie dargestellt auch eine Versorgung der Steuereinheit 72 mit Druckluft. Je nach dem an dem Steueranschluss 80 anliegenden Steuerdruck bestimmt die Steuereinheit 72 (unter Umständen mit einer Bremsdruckmodulation) den Druck in einer Betriebsbremssteuerleitung 83, welche mit einer Betriebsbremskammer 9 eines Kombi-Bremszylinders 7 verbunden ist. Eine Beaufschlagung einer Federspeicherkammer 8 des Kombi-Bremszylinders 7 erfolgt über eine Federspeicherbremsleitung 90, welche mit einem Ausgang 88 eines Wechselventils 73 verbunden ist. Ein Eingang 85 des Wechselventils 73 ist mit der Betriebsbremssteuerleitung 83 verbunden, während der andere Eingang 86 des Wechselventils 73 in in Fig. 1 nicht dargestellter Weise mit einem Parkventil verbunden ist. Mittels des Wechselventils 73, welches auch als "Anti-Compound-Ventil" bezeichnet werden kann, kann eine Bremskraftaddition mit gleichzeitiger Belüftung der Betriebsbremskammer 9 und Entlüftung der Federspeicherkammer 8 in an sich bekannter Weise vermieden werden.

Für das in Fig. 1 dargestellte Ausführungsbeispiel ist für den "normalen Fahrbetrieb" das Notbremsventils 19 in die in Fig. 1 nicht wirksame Schaltstellung umgeschaltet. In dieser Schaltstellung wird der Steuerdruck des Kupplungskopfs Bremse 3 durch das Notbremsventil 19 durchgeführt und dem Steueranschluss 80 der Steuereinheit 72 zugeführt, womit abhängig von der Vorgabe des Bremswunsches des Fahrers eine Steuerung der Betriebsbremse möglich ist. Die Umschaltung des Notbremsventils 19 in diese Schaltstellung erfolgt aber nur, wenn an dem Steueranschluss 139 hinreichender Steuerdruck anliegt, was wiederum erfordert, dass eine Druckbeaufschlagung des Kupplungskopfs Vorrat 2 vorliegt. Reißt der Kupplungskopf Vorrat 2 während der Fahrt ab, kommt es zu einer Leckage oder wird der Anhänger von dem Zugfahrzeug abgekoppelt, erfolgt eine automatische Umschaltung des Notbremsventils 19 in die in Fig. 1 wirksame Schaltstellung. In dieser wird Druck aus dem Behälter 4 über die Anschlüsse 141, 143 des Notbremsventils 19 dem Steueranschluss 80 zugeführt, womit eine Herbeiführung einer Bremswirkung über die Betriebsbremse erfolgt.

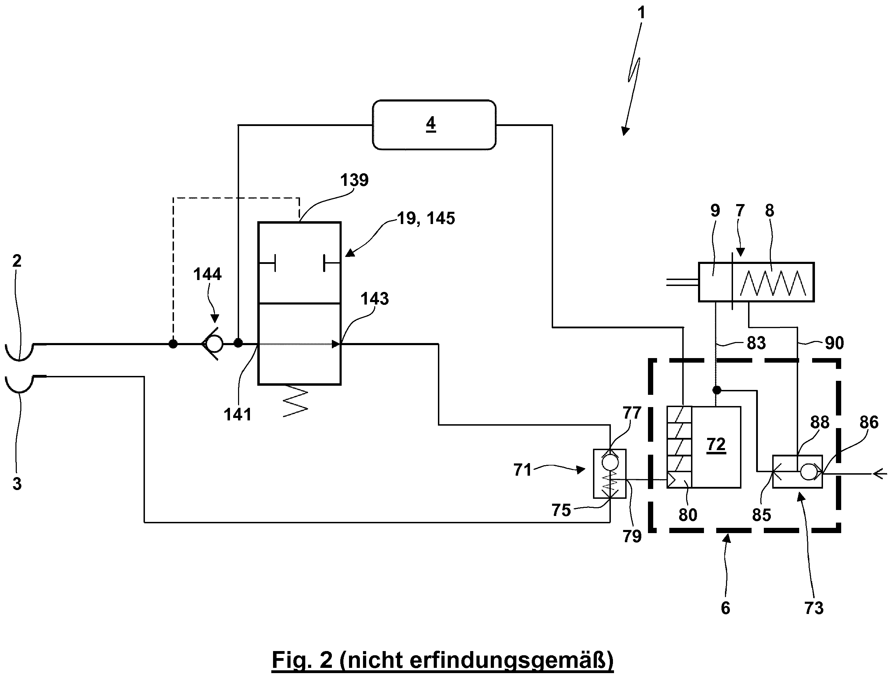

**Fig. 2** zeigt eine Ausgestaltung, bei welcher der Druck des Kupplungskopfs Bremse 3 abweichend zu Fig. 1 nicht über das Notbremsventil 19 dem Steueranschluss 80 der Steuereinheit 70 zugeführt ist. Vielmehr ist der Kupplungskopf Bremse 3 hier unmittelbar verbunden mit einem Eingang 75 eines Wechselventils 71. Der andere Eingang 77 des Wechselventils 71 ist mit dem ausgangsseitigen Anschluss 143 des Notbremsventils 19 verbunden. Ein Ausgangs 79 des Wechselventils 71 ist mit dem Steueranschluss 80 der Steuereinheit 72 verbunden.

Gemäß Fig. 2 ist das Notbremsventil 19 abweichend zu Fig. 1 als 2/2-Wegeventil 145 ausgebildet, wobei dieses lediglich über die Anschlüsse 141, 143 verfügt. Ohne an dem Steueranschluss 139 anliegenden Steuerdruck befindet sich das Notbremsventil 19 angesichts der Beaufschlagung durch eine Feder in der in Fig. 2 wirksamen Durchlassstellung, in welcher die Anschlüsse 141, 143 miteinander verbunden sind. Hingegen führt die hinreichende Druckbeaufschlagung des Steueranschlusses 139 zur Umschaltung des Notbremsventils 19 in die Sperrstellung.

Vorzugsweise ist das Wechselventil 71 wie in Fig. 2 dargestellt als "priorisiertes Wechselventil" ausgebildet, in welchem angesichts der Beaufschlagung eines Ventilkörpers durch eine Feder einer Verbindung des Eingangs 75 mit dem Ausgang 79 Vorrang eingeräumt ist.

Während des "normalen Fahrbetriebs" befindet sich angesichts der Druckbeaufschlagung des Steueranschlusses 139 das Notbremsventil 19 in der Sperrstellung. Das Wechselventil 71 stellt für den normalen Fahrbetrieb die Verbindung des Kupplungskopfs Bremse 3 über den Eingang 75 und den Ausgang 79 des Wechselventils 71 mit dem Steueranschluss 80 der Steuereinheit 72 bereit, womit im normalen Fahrbetrieb ohne Durchleitung des Steuerdrucks vom Kupplungskopf Bremse 3 durch das Notbremsventil 19 die Steuerung der Betriebsbremse ermöglicht ist. Bei Einbruch des Drucks an dem Steueranschluss 139 erfolgt die Umschaltung des Notbremsventils 19 in die in Fig. 2 wirksame Schaltstellung, in welcher dem Eingang 77 des Wechselventils 71 Druck aus dem Behälter 4 zur Verfügung gestellt wird. Diese Druckbeaufschlagung des Eingangs 77 des Wechselventils 71 führt dazu, dass das Wechselventil umschaltet, so dass eine Verbindung des Eingangs 77 mit dem Ausgang 79 erfolgt. Somit erfolgt in dieser Notbremssituation (womit auch eine Leckage oder ein Abkuppeln des Anhängers umfasst sein kann) die Druckbeaufschlagung des Steueranschlusses 80 aus dem Behälter 4, womit die Erzeugung einer Bremswirkung an der Betriebsbremse herbeigeführt ist.

Gemäß **Fig. 2** sind das Wechselventil 73 und die Steuereinheit 72 Bestandteil einer Ventileinrichtung 6, welche als Modul (ggf. mit Teilmodulen für die Steuereinheit 72 einerseits und das Wechselventil 73 andererseits) oder als singuläre Baueinheit mit einem einzigen Gehäuse ausgebildet sein kann. Die Ventileinrichtung 6 verfügt über einen Anschluss, welcher mit dem Ausgang 79 des Wechselventils 71 verbunden ist, einen Anschluss, welcher mit dem Behälter 4 verbunden ist, einen Anschluss für die Betriebsbremssteuerleitung 83, einen Anschluss für die Federspeicherbremsleitung 90 sowie einen Anschluss für eine Verbindung mit dem Parkventil (nicht dargestellt).

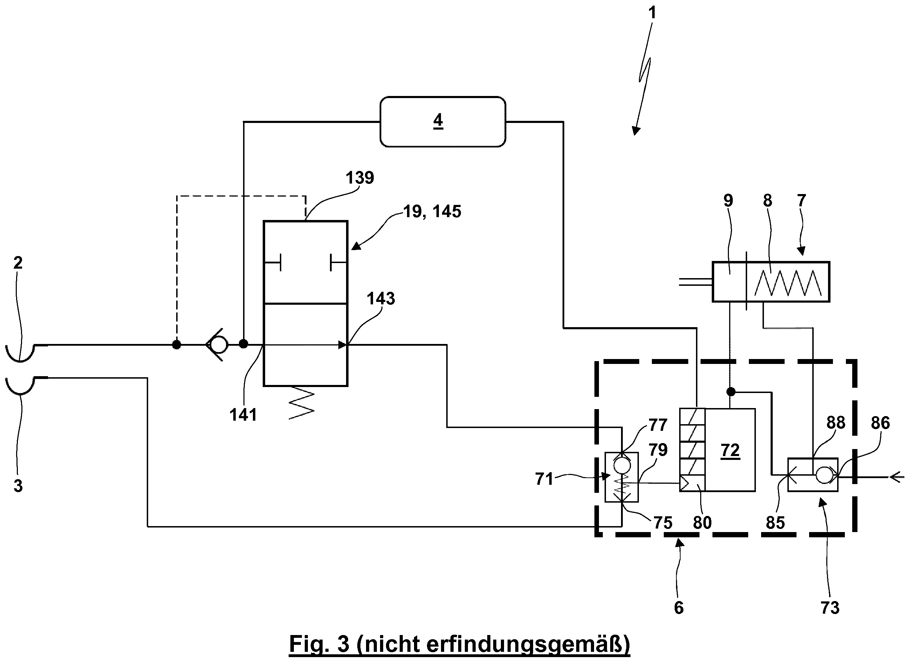

**Fig. 3** zeigt eine alternative Ausgestaltung der Ventileinrichtung 6 (bei ansonsten Fig. 2 entsprechender Ausgestaltung), für welche auch das Wechselventil 71 in die Ventileinrichtung 6 integriert ist. Damit entfällt der Anschluss der Ventileinrichtung 6, welcher gemäß Fig. 2 mit dem Ausgang 79 des Wechselventils 71 verbunden ist. Stattdessen besitzt die Ventileinrichtung 6 einen Anschluss, welcher unmittelbar mit dem Anschluss 143 des Notbremsventils 19 verbunden ist, sowie einen Anschluss, welcher unmittelbar mit dem Kupplungskopf Bremse 3 verbunden ist.

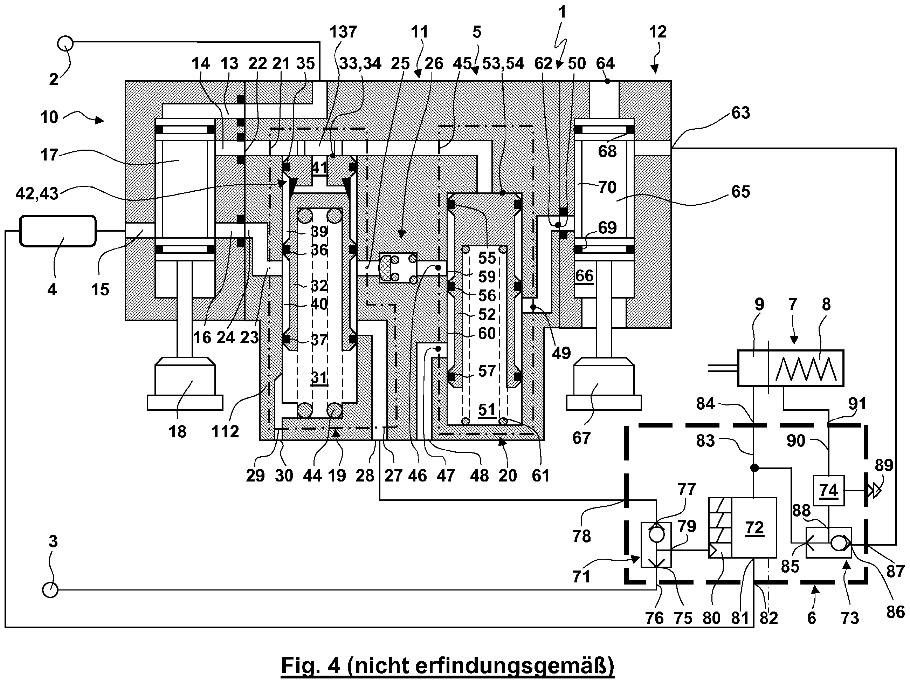

**Fig. 4** zeigt stark schematisiert eine Druckluftanlage 1 eines Anhängers eines Fahrzeugzugs bestehend aus einem Zugfahrzeug und dem Anhänger, insbesondere eines Nutzfahrzeug-Fahrzeugzugs. Eine pneumatische Kommunikation zwischen Zugfahrzeug und Anhänger erfolgt in bekannter Weise über einen Kupplungskopf Vorrat 2, über welchen die Druckluftanlage 1 mit Druckluft versorgt wird, sowie einen Kupplungskopf Bremse 3, über welchen die Druckluftanlage 1 mit einem Steuerdruck für eine Betriebsbremse versorgt wird, welcher insbesondere von dem Fahrer des Zugfahrzeugs über die Betätigung eines Bremspedals vorgegeben oder beeinflusst werden kann.

Die Druckluftanlage 1 verfügt über einen Behälter 4, eine Ventileinrichtung 5, eine weitere Ventileinrichtung 6 sowie Kombi-Bremszylinder 7 mit einer Federspeicherkammer 8 und einer Betriebsbremskammer 9, wobei in den Figuren zur Vereinfachung nur ein Kombi-Bremszylinder 7 dargestellt ist. Hierbei können einzelne Achsen auch lediglich mit Betriebsbremsen ohne Federspeicherbremsen ausgestattet sein.

Die Ventileinrichtung 5 ist mit einem Löseventil 10, einem Anhängerbremsventil 11 und einem Parkventil 12 gebildet. Für das dargestellte Ausführungsbeispiel sind das Löseventil 10, das Anhängerbremsventil 11 und das Parkventil 12 als Schieberventile ausgebildet, ohne dass dies zwingend der Fall ist.

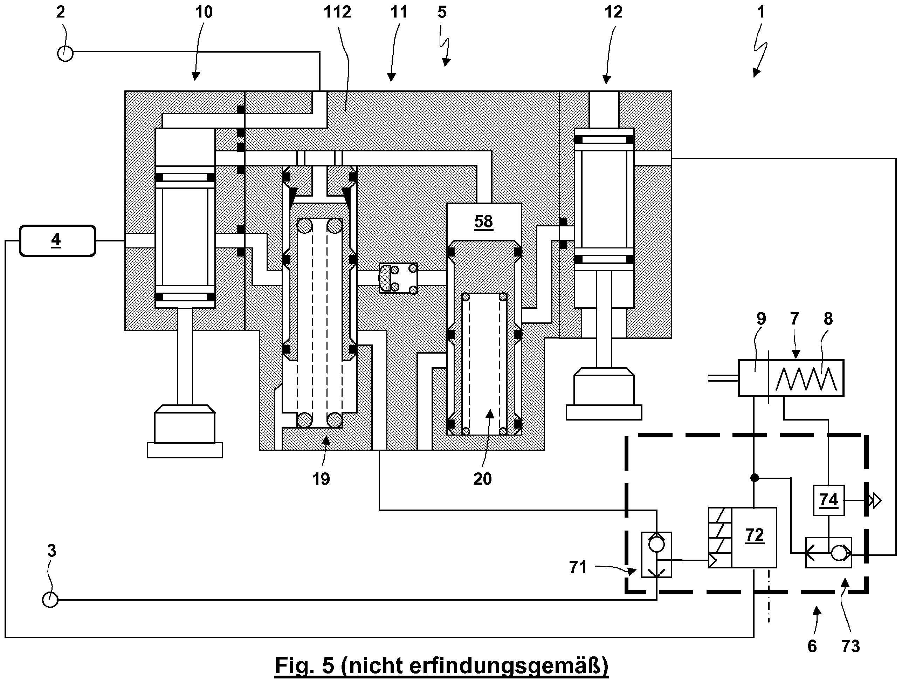

Das Löseventil 10 verfügt über einen mit dem Kupplungskopf Vorrat 2 verbundenen Anschluss 13. Während durchaus möglich ist, dass der Anschluss 13 unmittelbar mit dem Kupplungskopf Vorrat 2 verbunden ist, ist gemäß Fig. 4 die Verbindung zwischen dem Anschluss 13 und dem Kupplungskopf Vorrat 2 durch das Anhängerbremsventil 11 hindurchgeführt. Des Weiteren besitzt das Löseventil 10 einen Anschluss 14. Der Anschluss 14 wird für das Löseventil 10 in der Stellung Fahrt (vgl. Fig. 5) beaufschlagt mit dem Druck an dem Kupplungskopf Vorrat 2. Hingegen wird der Anschluss 14 in der in Fig. 4 wirksamen Lösestellung des Löseventils 10 mit dem Druck aus dem Behälter 4 beaufschlagt. Die an dem Anschluss 14 anstehende Druckluft wird als Steuerdruck in dem Anhängerbremsventil 11 genutzt und/oder über das Anhängerbremsventil 11 unter Rückführung durch das Löseventil 10 in der Stellung Fahrt des Löseventils 10 dem Behälter 4 zugeführt. Ein weiterer Anschluss 15 des Löseventils 10 ist unmittelbar mit dem Behälter 4 verbunden. Über einen Anschluss 16 ist der Anschluss 15 und damit der Behälter 4 unabhängig von der Stellung des Löseventils 10 mit dem Anhängerbremsventil 11 verbunden. Über den Anschluss 16 erfolgt einerseits eine Befüllung des Behälters 4 mit der von dem Kupplungskopf Vorrat 2 bereitgestellten Druckluft. Andererseits kann über den Anschluss 16 die Versorgung des Anhängerbremsventils 11 mit Druckluft aus dem Behälter 4 erfolgen. Ein Ventilschieber 17 befindet sich gemäß Fig. 4 in einer Lösestellung, in welcher der Anschluss 13 abgesperrt ist, während die Anschlüsse 14, 15, 16 miteinander verbunden sind. In der Stellung Fahrt, welche in **Fig. 5** dargestellt ist, erfolgt über das Löseventil 10 eine Verbindung der Anschlüsse 13, 14 einerseits und der Anschlüsse 15, 16 andererseits, während anderweitige Verbindungen der Anschlüsse 13-16 abgesperrt sind. Für drucklosen Anschluss 13 bzw. drucklosen Kupplungskopf Vorrat 2 ist das Löseventil 10 multistabil, so dass dieses je nach manueller Betätigung sowohl die Stellung Fahrt als auch die Lösestellung einnehmen kann und dann in dieser verbleibt. Über einen Betätigungsknopf 18 kann der Benutzer oder Fahrer manuell die Stellung des Löseventils 10 vorgeben. Erfolgt hingegen eine Druckluftbeaufschlagung des Kupplungskopfs Vorrat 2 bzw. des Anschlusses 13, wirkt der Druck auf eine Steuerfläche, hier eine Stirnfläche des Ventilschiebers 17, was die Überführung des Löseventils 10 aus der Lösestellung gemäß Fig. 4 in die Stellung Fahrt gemäß Fig. 5 zur Folge hat. Für das dargestellte Ausführungsbeispiel wird der Ventilschieber 17 zwischen den Stellungen translatorisch bewegt, wobei durchaus auch ein Löseventil 10 in Drehschieber-Bauweise Einsatz finden kann.

Das Anhängerbremsventil 11 verfügt über ein Notbremsventil 19 und ein Federspeicherventil 20. Das Notbremsventil 19 und das Federspeicherventil 20 können nicht manuell betätigt werden. Vielmehr werden diese jeweils mechanisch unabhängig voneinander pneumatisch in Abhängigkeit von mindestens einem Steuerdruck betätigt. In Fig. 4 sind das Notbremsventil 19 und das Federspeicherventil 20 schematisch mit der strichpunktierten Linie dargestellt. Diese Kennzeichnung ist in den folgenden Figuren zwecks Vereinfachung der Darstellung entfallen. Das Notbremsventil 19 und das Federspeicherventil 20 können in das Anhängerbremsventil 11 integrierte Baueinheiten mit einem eigenen Gehäuse sein oder ohne eigenes Gehäuse ausgebildet sind.

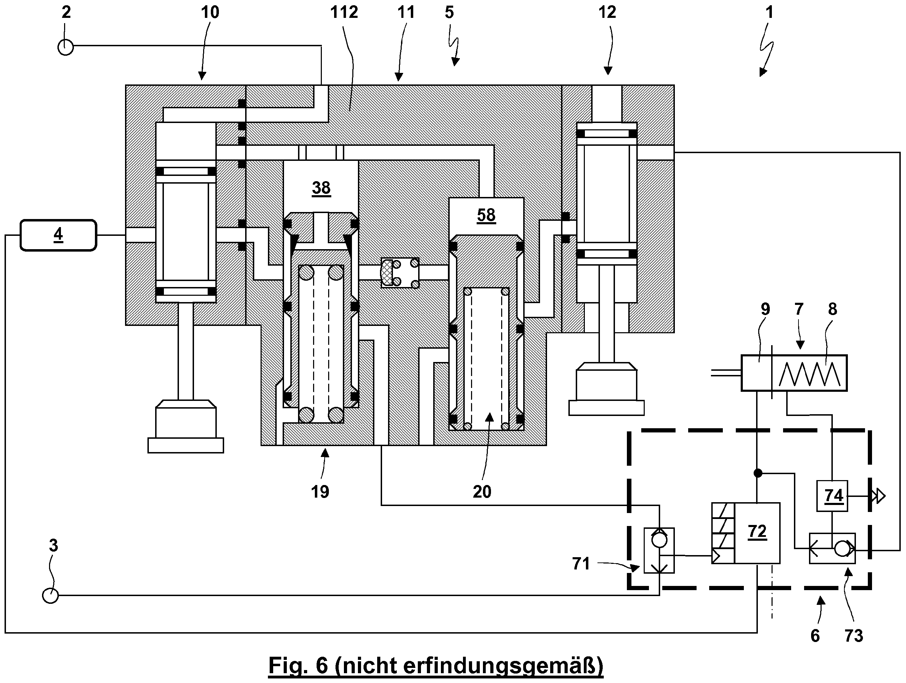

Das Notbremsventil 19 dient hierbei einer automatisierten Betätigung der Betriebsbremse mit einer Druckbeaufschlagung der Betriebsbremskammer 9 in einer Notbremsstellung (Umschaltdruck unterschritten, Fig. 4). Während diese Druckbeaufschlagung der Betriebsbremskammer 9 grundsätzlich auch unmittelbar erfolgen kann, erfolgt dies gemäß den dargestellten Ausführungsbeispielen unter Zwischenschaltung der weiteren Ventileinrichtung 6, insbesondere um eine modulierte EBS-Bremsung zu ermöglichen. Entsprechend kann über das Notbremsventil 19 auch automatisiert eine Betriebsbremskraft beseitigt werden (Umschaltdruck überschritten, Stellung Fahrt, Fig. 6).

Das Federspeicherventil 20 dient dem automatisierten Lösen (Umschaltdruck überschritten, Fig. 5) der Federspeicherbremse oder Aktivieren der Federspeicherbremse (Umschaltdruck unterschritten, Fig. 4) durch Beeinflussung der Druckverhältnisse in der Federspeicherkammer 8. Während dies grundsätzlich auch unmittelbar erfolgen kann, erfolgt dies gemäß Fig. 4 unter Zwischenschaltung des Parkventils 12 sowie der weiteren Ventileinrichtung 6, womit insbesondere ein ergänzendes manuelles Einwirken auf den Betriebszustand der Federspeicherbremse und die Vermeidung einer Bremskraftaddition an dem Kombi-Bremszylinder 7 ermöglicht werden soll.

Das Notbremsventil 19 besitzt einen Anschluss 21 für einen Steuerdruck. Gemäß Fig. 4 ist der Anschluss 21 über einen Anschluss 22 des Anhängerbremsventils 11 mit dem Anschluss 14 des Löseventils 10 verbunden. Des Weiteren verfügt das Notbremsventil 19 über einen Anschluss 23, welcher mit dem Behälter 4 verbunden ist, was gemäß Fig. 4 über einen Anschluss 24 des Anhängerbremsventils 11 erfolgt, der mit dem Anschluss 16 des Löseventils 10 verbunden ist. Ein weiterer Anschluss 25 des Notbremsventils 19 ist unter Zwischenschaltung eines Rückschlagventils 26 mit einem Anschluss 46 des Federspeicherventils 20 verbunden. Ein Anschluss 27 des Notbremsventils 19 ist über einen Anschluss 28 des Anhängerbremsventils 11 mit der weiteren Ventileinrichtung 6 verbunden. Schließlich ist ein Anschluss 29 des Notbremsventils 19 mit einer Entlüftung 30 des Anhängerbremsventils 11 verbunden.

Das Notbremsventil 19 verfügt über einen Aufnahmeraum 31, welcher mit den Anschlüssen 21, 23, 25, 27 und 29 verbunden ist. In dem Aufnahmeraum 31 ist ein Ventilschieber 32 verschieblich geführt. Der Ventilschieber 32 verfügt über eine Steuerfläche 33, welche hier von der Stirnfläche 34 des Ventilschiebers 32 ausgebildet ist, ohne dass dies zwingend der Fall sein muss. Der Ventilschieber 32 besitzt benachbart der Steuerfläche 33 eine Dichtkante 35, die mit einem Dichtring gebildet ist. Des Weiteren besitzt der Ventilschieber 32 Steuerkanten 36, 37, welche ebenfalls mit einem Dichtring gebildet sind. Die Dichtkante 35 und die Steuerkanten 36, 37 sind unter Abdichtung in dem Aufnahmeraum 31 geführt. Die Dichtkante 35, die Steuerfläche 33 und der Aufnahmeraum 31 begrenzen eine Steuerkammer 38 (vgl. Fig. 6), welche über den Anschluss 21 mit einem Steuerdruck beaufschlagt wird. Ein Ringraum 39 wird axial begrenzt durch die Dichtkante 35 und die Steuerkante 36 sowie radial begrenzt durch die Wandung des Aufnahmeraums 31 und den Ventilschieber 32. Ein weiterer Ringraum 40 ist axial begrenzt durch die Steuerkanten 36, 37 sowie radial begrenzt durch den Ventilschieber 32 und die Wandung des Aufnahmeraums 31. Die Steuerkammer 38 ist über einen sich durch das Innere des Ventilschiebers 32 erstreckenden Kanal 41 mit dem Ringraum 39 verbunden. Diese Verbindung erfolgt unter Zwischenschaltung eines in Richtung des Ringraums 39 öffnenden Rückschlagventils 42, welches für das dargestellte Ausführungsbeispiel als Dichtlippe 43 ausgebildet ist. Durchaus möglich ist aber, dass ein Rückschlagventil 42 in anderweitiger konstruktiver Ausgestaltung Einsatz findet. Auf der der Steuerfläche 33 gegenüberliegenden Seite ist der Ventilschieber 32 über eine vorgespannte Druckfeder 44 an einem Boden des Aufnahmeraums 31 abgestützt, so dass unterhalb eines Umschaltdrucks des Notbremsventils 19 das Volumen der Steuerkammer 38 minimiert ist und das Notbremsventil 19 die in Fig. 4 dargestellte Notbremsstellung einnimmt. Hierbei ist der Umschaltdruck des Notbremsventils 19 abhängig von der Vorspannung der Druckfeder 44 und der Fläche der Steuerfläche 33, welche mit dem Steuerdruck in der Steuerkammer 38 beaufschlagt wird.

In der in Fig. 4 wirksamen Notbremsstellung des Notbremsventils 19 ist der Ringraum 39 zwar über das Rückschlagventil 42 mit dem Anschluss 21 verbunden. Eine anderweitige Verbindung des Ringraums 39 mit Anschlüssen des Notbremsventils 19 erfolgt aber nicht, insbesondere in Folge der Absperrung durch die Steuerkante 36. Der Ringraum 40 verbindet den Anschluss 23, also letztendlich den Behälter 4, mit dem Anschluss 25 sowie dem Anschluss 27, womit eine Belüftung des Anschlusses 27 erfolgen kann.

In alternativer, in den Figuren nicht dargestellter Ausführungsform ist es auch möglich, dass das Rückschlagventil 42 an anderer Stelle zwischen den Anschlüssen 14, 16 oder zwischen den Anschlüssen 21, 24 angeordnet ist, wobei dann auch die Leitungsverbindung am Notbremsventil 19 vorbeigeführt sein kann und/oder auch eine Befüllung des Behälters 4 unabhängig von der Betriebsstellung des Notbremsventils 19 möglich ist.

Übersteigt der Steuerdruck in der Steuerkammer 38 den Umschaltdruck des Notbremsventils 19, nimmt dieses die Stellung Fahrt gemäß Fig. 6 ein. Hierbei überfährt die Steuerkante 36 die den Anschlüssen 23, 25 zugeordnete Querbohrung. In der Stellung Fahrt verbindet somit der Ringraum 39 die Anschlüsse 23, 25 miteinander. Hingegen erfolgt über die Steuerkante 36 in der Stellung Fahrt eine Trennung des Anschlusses 27 von dem Anschluss 23, also letztendlich von dem Behälter 4. Da die Steuerkante 37 eine dem Anschluss 30 zugeordnete Bohrung überfährt, ist in der Stellung Fahrt des Notbremsventils 19 der Anschluss 27 mit dem Anschluss 29 verbunden, womit eine Entlüftung des Anschlusses 27 erfolgen kann.

Das Federspeicherventil 20 verfügt über einen Anschluss 45 für einen Steuerdruck, welcher mit dem Anschluss 22 des Anhängerbremsventils 11 verbunden ist (was gemäß Fig. 4 unter Hindurchführung durch das Notbremsventil 19 erfolgt, ohne dass dies zwingend der Fall ist). Darüber hinaus besitzt das Federspeicherventil 20 einen Anschluss 46, welcher über das Rückschlagventil 26 mit dem Anschluss 25 des Notbremsventils 19 verbunden ist, sowie einen Anschluss 47, welcher mit einer Entlüftung 48 des Anhängerbremsventils 11 verbunden ist, wobei es sich auch um eine gemeinsame Entlüftung 30 für das Notbremsventil 19 und das Federspeicherventil 20 handeln kann. Weiterhin besitzt das Federspeicherventil 20 einen Anschluss 49, welcher mit einem Anschluss 50 des Anhängerbremsventils 11 verbunden ist, welcher wiederum mit einem Anschluss 62 des Parkventils 12 verbunden ist. Das Federspeicherventil 20 weist einen Aufnahmeraum 51 auf, in welchem ein Ventilschieber 52 verschieblich geführt ist. Der Ventilschieber 52 verfügt über eine Steuerfläche 53, welche hier als Stirnfläche 54 ausgebildet ist, ohne dass dieses zwingend der Fall sein muss. Der Druck des Kupplungskopfs Vorrat 2 wird gemäß Fig. 4 über eine Verzweigung 137 den beiden Steuerleitungszweigen zugeführt, welche die Steuerflächen 33, 53 der Ventilschieber 32, 52 beaufschlagen. Der Ventilschieber 52 bildet, insbesondere mit einem Dichtring, eine Dichtkante 55 sowie eine Steuerkante 56 und eine weitere Dichtkante 57 aus. Eine Steuerkammer 58, welche über den Anschluss 45 mit einem Steuerdruck beaufschlagt ist, ist begrenzt durch die Steuerfläche 53, die Dichtkante 55 und die Wandung des Aufnahmeraums 51. Ein Ringraum 59 ist axial begrenzt durch die Dichtkante 55 und die Steuerkante 56 sowie radial begrenzt durch die den Aufnahmeraum 51 begrenzende Wandung und den Ventilschieber 52. Ein Ringraum 60 ist axial begrenzt durch die Steuerkante 56 sowie die Dichtkante 57 sowie radial begrenzt durch die den Aufnahmeraum 51 begrenzende Wandung und den Ventilschieber 52. Auf der der Steuerfläche 53 gegenüberliegenden Seite ist der Ventilschieber 52 über eine vorgespannte Druckfeder 61 an einem Boden des Aufnahmeraums 51 abgestützt, so dass für einen Steuerdruck in der Steuerkammer unterhalb eines Umschaltdrucks des Federspeicherventils 20 das Federspeicherventil eine Entlüftungsstellung einnimmt, in welcher das Volumen der Steuerkammer 58 minimal ist (vgl. Fig. 4). Überschreitet hingegen der Steuerdruck in der Steuerkammer 58 den Umschaltdruck, wird das Federspeicherventil 19 aus der Entlüftungsstellung gemäß Fig. 4 in eine Belüftungsstellung gemäß Fig. 5 überführt. Der Umschaltdruck ist konstruktiv vorgegeben durch die Vorspannung und Federsteifigkeit der Druckfeder 61 und die Fläche der Steuerfläche 53. In der Entlüftungsstellung verbindet das Federspeicherventil 20 die Anschlüsse 47, 49 über den Ringraum 60, womit eine Entlüftung des Anschlusses 49 erfolgt. Hingegen sperrt die Steuerkante 56 eine Verbindung der Anschlüsse 47, 49 mit dem Anschluss 46. Mit der Bewegung des Federspeicherventils 20 von der Entlüftungsstellung in die Belüftungsstellung mit Überschreiten des Umschaltdrucks überfährt die Steuerkante 56 eine dem Anschluss 49 zugeordnete Querbohrung, womit die Steuerkante 56 dann eine Verbindung der Anschlüsse 47, 49 absperrt. Stattdessen erfolgt über den Ringraum 59 in der Belüftungsstellung eine Verbindung der Anschlüsse 46, 49 miteinander, womit letztendlich (bei hinreichendem Druckunterschied zur Öffnung des Rückschlagventils 26) eine Verbindung des Anschlusses 49 mit dem Behälter 4 erfolgt, was unabhängig von der Stellung des Notbremsventils 19 der Fall ist.

Das Parkventil 12 ist für das Ausführungsbeispiel gemäß Fig. 4 in an sich bekannter Weise als manuell betätigbares 3/2-Wegeventil ausgebildet. Dieses verfügt über einen Anschluss 62, über welchen das Parkventil mit dem Anschluss 50 des Anhängerbremsventils 11 verbunden ist. Befindet sich das Federspeicherventil 20 in der Belüftungsstellung, erfolgt eine Belüftung des Anschlusses 62 des Parkventils 12 aus dem Behälter. Befindet sich hingegen das Federspeicherventil 20 in seiner Entlüftungsstellung, erfolgt eine Entlüftung des Anschlusses 62 des Parkventils. Das Parkventil 12 verfügt auch über einen Anschluss 63, welcher (hier unter Zwischenschaltung der weiteren Ventileinrichtung 6) mit der Federspeicherkammer 8 verbunden ist. Das Parkventil 12 besitzt auch einen Anschluss 64 für eine Entlüftung. Das Parkventil 12 ist mit einem Ventilschieber 65 ausgebildet, der in einem Aufnahmeraum 66 verschieblich ist, zwei metastabile Stellungen einnehmen kann und von dem Benutzer über einen Betätigungsknopf 67 willkürlich in die beiden Stellungen bewegt werden kann, wo dieses dann verbleibt. Der Ventilschieber 65 verfügt über eine Steuerkante 68 sowie eine Dichtkante 69. Ein Ringraum 70 ist axial begrenzt durch die Steuerkante 68 und die Dichtkante 69 sowie radial begrenzt durch eine den Aufnahmeraum 66 begrenzende Wandung sowie den Ventilschieber 65. In der in Fig. 4 wirksamen Stellung Fahrt verbindet der Ringraum 70 die Anschlüsse 62, 63 miteinander, während die Entlüftung 64 über die Steuerkante 68 abgesperrt ist. Wird hingegen manuell das Parkventil 12 aus der Stellung Fahrt gemäß Fig. 4 überführt in eine Stellung Parken, überfährt die Steuerkante eine dem Anschluss 63 zugeordnete Querbohrung, womit die Steuerkante 68 eine Verbindung der Anschlüsse 62, 63 absperrt und eine Verbindung des Anschlusses 64 mit dem Anschluss 63 freigibt, womit eine Entlüftung des Anschlusses 63 erfolgt.

Die weitere Ventileinrichtung 6 verfügt über ein Wechselventil 71, eine Steuereinheit 72, bei welcher es sich vorzugsweise um eine ABS- oder EBS-Steuereinheit handelt, ein weiteres Wechselventil 73 und ein Schnellentlüftungsventil 74.

Das Wechselventil 71 besitzt einen Eingang 75, welcher über einen Anschluss 76 der weiteren Ventileinrichtung 6 unmittelbar ohne Zwischenschaltung weiterer Ventilelemente und/oder ohne Zwischenschaltung des Anhängerbremsventils 11, des Federspeicherventils 20 und des Notbremsventils 19 mit dem Kupplungskopf 3 verbunden ist. Ein weiterer Eingang 77 des Wechselventils 71 ist über einen Anschluss 78 der weiteren Ventileinrichtung 6 unmittelbar ohne Zwischenschaltung weiterer Ventilelemente verbunden mit dem Anschluss 28 des Anhängerbremsventils 11. Ein Ausgang 79 des Wechselventils 71 ist unmittelbar verbunden mit einem pneumatischen Steueranschluss 80 der Steuereinheit 72. Die Steuereinheit 72 wird über einen Anschluss 81 der Steuereinheit 72 und einen Anschluss 82 der weiteren Ventileinrichtung 6 aus dem Behälter 4, insbesondere unmittelbar ohne Zwischenschaltung weiterer Ventilelemente, mit Druckluft versorgt. Ausgangsseitig ist die Steuereinheit 72 über eine Betriebsbremssteuerleitung 83 mit einem Anschluss 84 der weiteren Ventileinrichtung 6 mit der Betriebsbremskammer 9 verbunden.

Das Wechselventil 73 verfügt über einen Eingang 85, welcher mit der Betriebsbremssteuerleitung 83 verbunden ist, sowie einen Eingang 86, welcher über einen Anschluss 87 der weiteren Ventileinrichtung 6 mit dem Anschluss 63 des Parkventils 12 verbunden ist. Ein Ausgang 88 des Wechselventils 73 ist über das Schnelllöseventil 74, welches eine zugeordnete Entlüftung 89 besitzt, mit einer Federspeicherbremsleitung 90 verbunden, welche über einen Anschluss 91 der weiteren Ventileinrichtung 6 zu der Federspeicherkammer 8 führt.

Die Zusammenfassung der einzelnen Ventile und Bauelemente zu Baueinheiten ist in Fig. 4 lediglich beispielhaft gewählt. Durchaus möglich ist, dass hier in eine Baueinheit integrierte Ventile und Bauelemente für alternative Ausgestaltungen separat ausgebildet sind und beispielsweise lediglich über pneumatische Verbindungen miteinander verbunden sind. Entsprechend ist auch möglich, dass in Fig. 4 separat dargestellte Baueinheiten zu einer Baueinheit zusammengefasst sind. Um lediglich ein nicht beschränkendes Beispiel zu nennen, ist es durchaus möglich, dass für eine Ventileinrichtung das Löseventil 10, das Anhängerbremsventil 11 und das Parkventil 12 nicht wie dargestellt aneinander angeflanscht sind, sondern vielmehr als singuläre Bauelemente ausgebildet sind, welche über pneumatische Verbindungsleitungen miteinander verbunden sind. Weiterhin sind für das erläuterte Ausführungsbeispiel das Notbremsventil 19 und das Federspeicherventil 20 als integrale Bestandteile einer Baueinheit in Form des Anhängerbremsventils 11 ausgebildet. Alternativ oder zusätzlich zu den zuvor erläuterten Modifikationen ist es durchaus möglich, dass das Notbremsventil 19 und/oder das Federspeicherventil 20 als singuläre Bauelemente ausgebildet sind, wobei auch möglich ist, dass lediglich das Notbremsventil 19 in ein Anhängerbremsventil 11 integriert ist, während das Federspeicherventil 20 separat von dem Anhängerbremsventil 11 ausgebildet ist.

Die Funktionsweise der Druckluftanlage 1 gemäß Fig. 4 bis 6 ist wie folgt:
Für abgestellten Anhänger und entleerten Behälter 4 befindet sich die Ventileinrichtung 5 in dem in Fig. 4 dargestellten Betriebszustand. In diesem Betriebszustand sind angesichts des leeren Behälters 4 und mangels Druckbeaufschlagung des Kupplungskopfs Bremse 3 die Eingänge 76, 77 des Wechselventils 71 nicht druckbeaufschlagt, so dass der Steueranschluss 80 ebenfalls nicht druckbeaufschlagt ist. Damit wird in diesem Betriebszustand keine Bremswirkung über die Betriebsbremskammer 9 erzeugt. Über das Federspeicherventil 20 in der Entlüftungsstellung und das Parkventil 12 wie dargestellt in der Stellung Fahrt ist auch der Anschluss 63 entlüftet, was zur Folge hat, dass die Federspeicherbremskammer 8 entlüftet ist und die Federspeicherbremse wirksam ist. Der Anhänger ist somit für leeren Behälter 4 über die Federspeicherbremse gebremst.

Für drucklose Kupplungsköpfe 2, 3, aber hinreichend druckbeaufschlagten Behälter 4 führt hingegen der dem Behälter 4 entstammende Steuerdruck für das Notbremsventil 19 und das Federspeicherventil 20 zur Umschaltung des Notbremsventils 19 in die Entlüftungsstellung und des Federspeicherventils 20 in die Belüftungsstellung (Fig. 6). Dies hat zur Folge, dass der Steueranschluss 80 der Steuereinheit 72 drucklos ist, womit die Betriebsbremskammer 9 entlüftet ist, also keine Betriebsbremskraft erzeugt wird. Gleichzeitig erfolgt für das Parkventil 12 in der Stellung Fahrt die Druckbeaufschlagung der Federspeicherkammer 8, so dass die Federspeicherbremse gelöst ist. Damit ist der Anhänger rangierfähig. Soll hingegen der Anhänger gebremst werden, kann dies über die manuelle Überführung des Parkventils 12 von der Stellung Fahrt in die Stellung Parken durch den Benutzer bewerkstelligt werden.

Mit Anschluss der Kupplungsköpfe 2, 3 führt die Druckbeaufschlagung der Steuerfläche des Ventilschiebers 17 dazu, dass das Löseventil aus der Lösestellung gemäß Fig. 4 überführt wird in die Stellung Fahrt. Damit werden die Steuerflächen 33, 53 der Ventilschieber 32, 52 mit dem Druck an dem Kupplungskopf Vorrat 2 beaufschlagt. Für das dargestellte Ausführungsbeispiel ist ein Befüllen des Behälters 4 von dem Kupplungskopf Vorrat 2 nicht möglich, solange der Umschaltdruck des Notbremsventils 19 nicht erreicht ist. Ist der Umschaltdruck des Federspeicherventils 20 kleiner gewählt als der des Notbremsventils 19, schaltet das Federspeicherventil 20 zuerst um, wie dies in Fig. 5 dargestellt ist. Diese Umschaltung bewirkt, dass die Federspeicherbremse nicht wie gemäß Fig. 4 über das Federspeicherventil 20 entlüftet wird, sondern vielmehr über das Federspeicherventil 20 eine Verbindung zwischen der Federspeicherkammer 8 und dem Behälter 4 geschaffen wird. Somit wird (für ausreichendem Druck in dem Behälter 4) die Federspeicherbremse gelöst. Andererseits wird der Druck aus dem Behälter 4 über das Notbremsventil 19 in der Notbremsstellung dem Steueranschluss 80 zugeführt, womit dann eine Bremskraft an der Betriebsbremse erzeugt wird. Mit weiterem Anstieg des Drucks an dem Kupplungskopf Vorrat 2 erfolgt dann auch die Umschaltung des Notbremsventils 19, welche zur Folge hat, dass der Eingang 77 des Wechselventils 71 entlüftet wird. Ohne einen Bremssteuerdruck an dem Kupplungskopf Bremse 3 ist die Betriebsbremse nun entlüftet, da beide Eingänge 76, 77 entlüftet sind, was die Entlüftung des Steueranschlusses 80 zur Folge hat. Liegt hingegen ein Bremssteuerdruck an dem Kupplungskopf Bremse 3 vor, so kann das Wechselventil 71 diesen Bremssteuerdruck an den Steueranschluss 80 der Steuereinheit 72 weitergeben, so dass je nach Druck an dem Kupplungskopf Bremse 3 eine Betriebsbremskraft erzeugt wird oder nicht. Mit der Umschaltung sowohl des Federspeicherventils 20 als auch der späteren Umschaltung des Notbremsventils 19 ist der Anhänger somit fahrbereit **(****Fig. 6****)**. Ein Befüllung des Behälters 4 über den Kupplungskopf Vorrat 2 ist erst nach der Überführung des Notbremsventils 19 von der Notbremsstellung in die Stellung Fahrt möglich.

Kommt es während des Fahrbetriebs zu einer Notbremssituation, insbesondere mit einem Abriss des Kupplungskopfs Vorrat 2, hat dies zur Folge, dass über den Kupplungskopf Vorrat 2 die Steuerkammern 38, 58 entlüftet werden, so dass das Federspeicherventil 20 und das Notbremsventil 19 in die Betriebsstellungen gemäß Fig. 4 überführt werden. Dies hat die Entlüftung der Federspeicherkammer 8 über das Parkventil 12 und das Federspeicherventil 20 zu der Entlüftung 48 zur Folge. Gleichzeitig erfolgt aber über das Notbremsventil 19 die Belüftung des Eingangs 77 des Wechselventils 71 und damit des Steuereingangs 80 aus dem Behälter 4, womit auch eine modulierte Notbremsung über die Betriebsbremse möglich ist, sofern der Druck in dem Behälter 4 ausreichend ist. Hierbei vermeidet das Wechselventil 73 eine Bremskraftaddition in dem Kombi-Bremszylinder. Mit zunehmendem Abfall des Drucks in dem Behälter 4 wird die Erzeugung der (Not-)Bremskraft zunehmend von der Betriebsbremse auf die Federspeicherbremse übergeben.

Möglich ist, dass mittels der Ventileinrichtung zwei unterschiedliche Möglichkeiten geschaffen sind, den Eingang 68 des Wechselventils 73 und letztendlich auch die Federspeicherkammer 8 zu entlüften:
- Dies kann erfolgen, indem das Parkventil 12 in die Parkstellung überführt wird. In der Parkstellung des Löseventils 12 erfolgt die Entlüftung unabhängig von anderen pneumatischen Drücken allein auf Grundlage der Betriebsstellung des Parkventils 12. Unbenommen ist hierbei allerdings, dass zur Vermeidung einer Kräfteaddition eine Belüftung der Federspeicherkammer 8 über das Wechselventil 73 (entsprechend dem Druck in der Betriebsbremssteuerleitung) erfolgt.
- Hingegen ist die zweite Möglichkeit der Entlüftung gegeben, wenn sich das Parkventil 12 in der Stellung Fahrt befindet. In diesem Fall ist die Herbeiführung einer Entlüftung abhängig von der Stellung des Federspeicherventils 20 - befindet sich dieses in der Entlüftungsstellung, erfolgt zwingend eine Entlüftung. Befindet sich dieses hingegen in der belüfteten Stellung, erfolgt die Beaufschlagung des Eingangs 86 mit dem Druck des Behälters 4.

**Fig. 6** zeigt eine Ausführungsform der Druckluftanlage 1 sowie der Ventileinrichtung 5, bei welcher (bei ansonsten Fig. 4 bis 6 entsprechende Ausgestaltung) der Umschaltdruck des Notbremsventils 19 niedriger ist als der des Federspeicherventils 20.

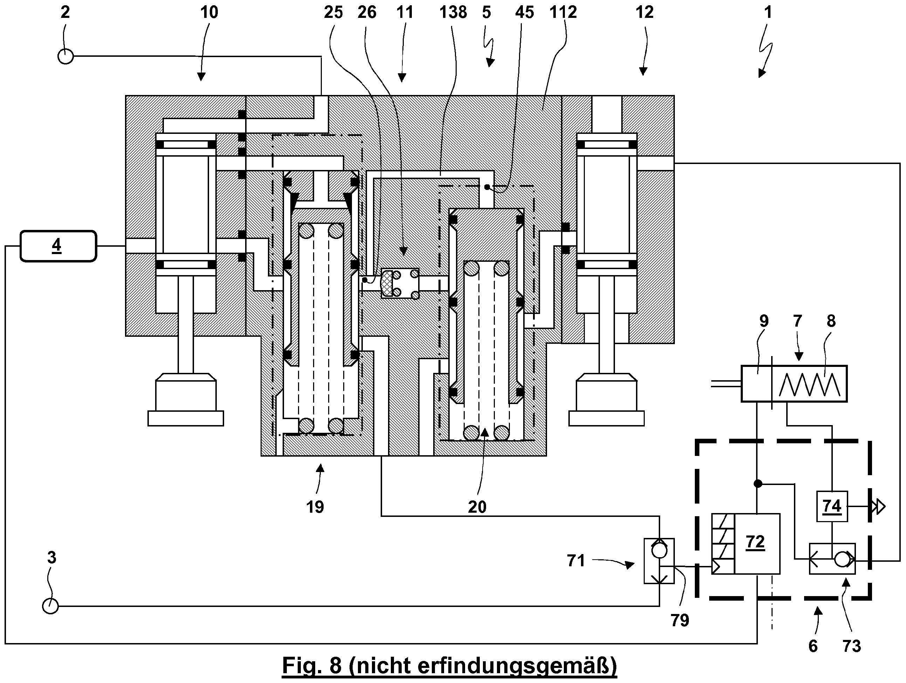

Gemäß dem in **Fig. 8** dargestellten Ausführungsbeispiel ist der Anschluss 45 zur Zuführung des Steuerdrucks zu dem Federspeicherventil 20 nicht (unmittelbar) mit dem Anschluss 14 bzw. 22 verbunden. Vielmehr ist hier der Anschluss 45 des Federspeicherventils 20 unter Umgehung des Rückschlagventils 26 über eine Steuerleitung 138 mit dem Anschluss 25 des Notbremsventils 19 verbunden, was zur Folge hat, dass an dem Federspeicherventil 20 in jedem Fall als Steuerdruck der Druck des Behälters 4 anliegt. Für entleerten Behälter 4 kann überhaupt erst eine Erzeugung eines Steuerdrucks für das Federspeicherventil 20 (und damit eine Umschaltung desselben) erfolgen, wenn eine Umschaltung des Notbremsventils 19 von der in Fig. 8 dargestellten Notbremsstellung in die Stellung Fahrt erfolgt ist: Erst dann erfolgt über das Rückschlagventil 42 die Befüllung des Behälters 4 und gleichzeitig die Erhöhung des Steuerdrucks in der Steuerkammer 58 des Federspeicherventils 20, wobei dann für hinreichende Befüllung des Behälters 4 die Umschaltung des Federspeicherventils 20 erfolgt. Damit erfolgt für (hinreichend) entleerten Behälter 4 in jedem Fall die Umschaltung des Notbremsventils 19 vor dem Umschalten des Federspeicherventils 20.

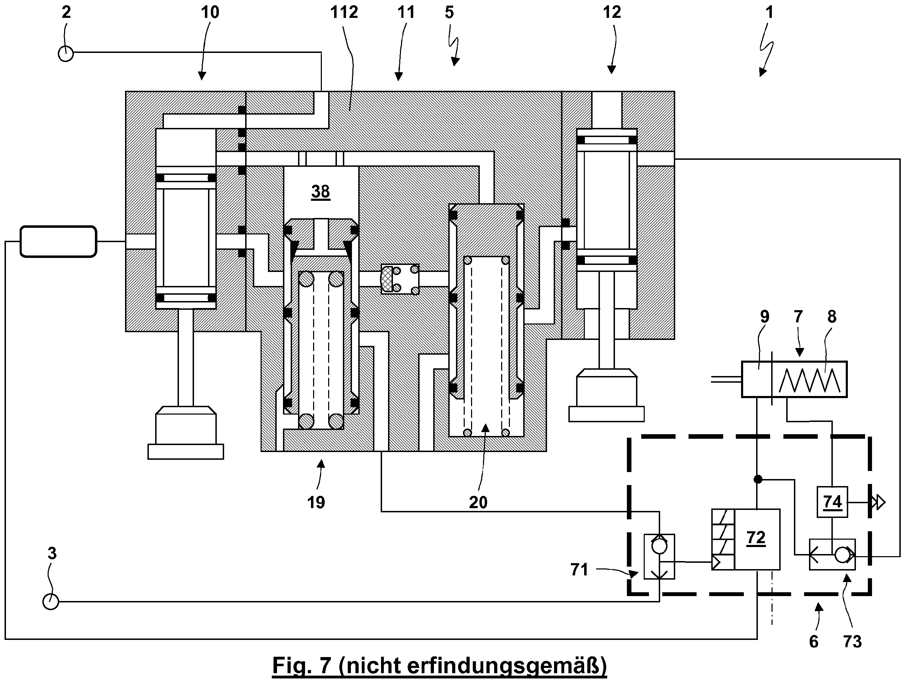

In Fig. 8 ist darüber hinaus beispielhaft dargestellt, wie abweichend zu den Ausführungsbeispielen gemäß Fig. 4 bis 7 ein einzelnes pneumatisches Element oder Ventil nicht integriert in eine Ventileinrichtung ausgeführt sein kann, sondern vielmehr als singuläres Bauelement. Hierbei handelt es sich in Fig. 8 um das Wechselventil 71, welches abweichend zu Fig. 4 bis 7 außerhalb der weiteren Ventileinrichtung 6 angeordnet ist und mit dieser über eine dem Ausgang 79 des Wechselventils 71 zugeordnete Leitung mit zugeordnetem Anschluss der Ventileinrichtung 6 kommuniziert.

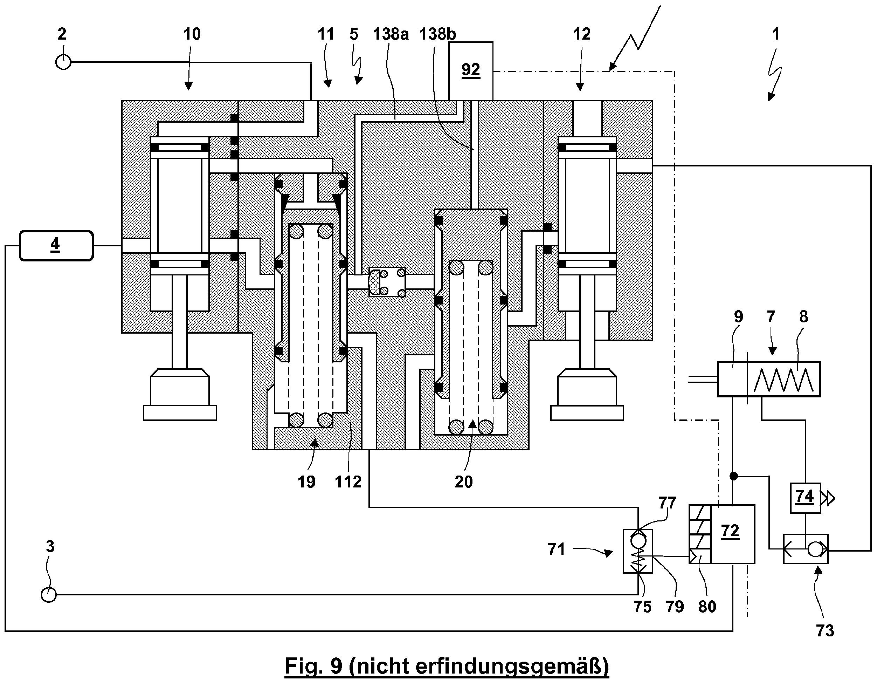

Gemäß dem Ausführungsbeispiel, welches in **Fig. 9** dargestellt ist, sind die Anschlüsse 25, 45 nicht unmittelbar über die Steuerleitung 138 miteinander verbunden. Vielmehr ist zwischen Steuerleitungszweige 138a, 138b ein Magnetventil 92 zwischengeschaltet, über welche zusätzlich zu dem an dem Anschluss 25 anliegenden Druck des Behälters 4, welcher als Steuerdruck auf das Federspeicherventil 20 einwirkt, eine Beeinflussung der Betriebsstellung des Federspeicherventils 20 möglicht ist. Während beliebige Ausgestaltungen des Magnetventils 92 möglich sind, ist im einfachsten Fall das Magnetventil als 2/2-Wege-Ventil ausgebildet mit einer Sperrstellung sowie einer Durchlassstellung. Eine Ansteuerung des Magnetventils 92 erfolgt durch eine elektronische Steuereinheit. Vorzugsweise handelt es sich hierbei um die Steuereinheit 72, so dass diese multifunktional ausgebildet ist, indem diese zusätzlich auch für die Ansteuerung des Magnetventils 92 und damit die Ansteuerung des Federspeicherventils 20 zuständig ist. Beispielsweise kann bei abgekuppelten Zustand das Magnetventil 92 in die Durchlassstellung geschaltet sein, so dass bei einem Druckabfall in dem Behälter 4 mit Unterschreiten des Umschaltdrucks des Federspeicherventils 20 dieses automatisiert in die Entlüftungsstellung überführt werden kann, womit das selbstständige Betätigen der Federspeicherbremse erfolgen kann. Hingegen kann grundsätzlich während der Fahrt des Anhängers das Magnetventil 92 in seine Sperrstellung überführt sein, was vorzugsweise der Fall ist, wenn keine elektrische Spannung anliegt. Kommt es dann insbesondere bei einer intensiven ABS-Bremsung zu einem Abfall des Drucks in dem Behälter 4, führt dieser Druckabfall nicht zu einem unerwünschten Umschalten des Federspeicherventils 20, welches einen unerwünschten Einfall der Federspeicherbremse zur Folge hätte.

Weiterhin ist gemäß Fig. 9 das Wechselventil 71 nicht mit gleichberechtigten Anschlüssen 75, 77 ausgestattet. Vielmehr ist hier der Anschluss 75 priorisiert, indem beispielsweise der Ventilkörper des Wechselventils 71 über eine Feder in Schließrichtung des Anschlusses 77 beaufschlagt ist. Damit hat der vom Kupplungskopf Bremse 3 bereitgestellte Bremssteuerdruck Vorrang gegenüber dem von dem Anschluss 28 des Anhängerbremsventils 11 bereitgestellten Druck. Hierdurch kann die Schwellzeit für die Zuführung des Drucks von dem Kupplungskopf Bremse 3 zu dem Steueranschluss 80 reduziert werden.

Für das Ausführungsbeispiel gemäß Fig. 9 ist das Magnetventil 92 von außen an ein Gehäuse des Anhängerbremsventils 11 angeflanscht oder hieran befestigt. Durchaus möglich ist auch, dass das Magnetventil 92 separat von dem Anhängerbremsventil 11 ausgebildet ist oder dass das Magnetventil 92 in das Anhängerbremsventil 11 integriert ist. Das Magnetventil 92 ist vorzugsweise stromlos geschlossen.

Darüber hinaus sind gemäß Fig. 9 die Bauelemente, die für die vorangegangenen Ausführungsbeispiele in die Ventileinrichtung 6 integriert waren, als singuläre Bauelemente ausgebildet.

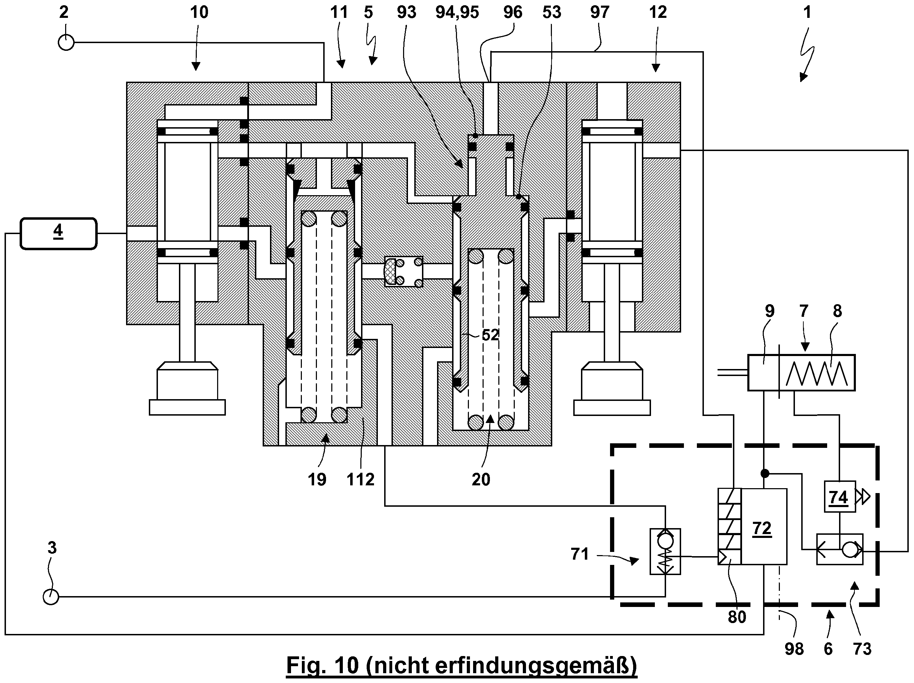

Für das in **Fig. 10** dargestellte Ausführungsbeispiel ist, bei ansonsten im Wesentlichen Fig. 4 entsprechender Ausgestaltung, der Ventilschieber 52 mit einem Differentialkolben 93 ausgebildet, so dass dieser zusätzlich zu der Steuerfläche 53, welche über den Anschluss 45 mit einem Steuerdruck, welcher dem Behälter 4 entstammt, beaufschlagt ist, eine weitere Steuerfläche 94 besitzt. Für das dargestellte Ausführungsbeispiel ist die Steuerfläche 53 als Ringfläche ausgebildet, während die Steuerfläche 94 von einer Stirnfläche 95 des Ventilschiebers 52 gebildet ist. Das Federspeicherventil 20 bzw. das Anhängerbremsventil 11 besitzt in diesem Fall einen Anschluss 96, über welchen eine Beaufschlagung mit einem (weiteren) Steuerdruck über eine Steuerleitung 97 erfolgt. Der Druck in der Steuerleitung 97 wird vorgegeben durch eine Steuereinheit, bei welcher es sich um die Steuereinheit 72 handeln kann, so dass diese eine weitere Funktion erfüllen kann. Möglich ist, dass über eine elektrische Signalleitung 98 der Steuereinheit 72 Signale von einer Sensorik des Anhängers zugeführt werden.

Während der Fahrt wird grundsätzlich kein Steuerdruck in der Steuerleitung 97 erzeugt. Kommt es während der Fahrt zu einem hohen Luftverbrauch, insbesondere durch eine intensive modulierte Bremsbetätigung, welche ohne weitere Maßnahmen zum Umschalten des Federspeicherventils 20 und damit zum Einfallen der Federspeicherbremsen führen würde, wird über die Steuereinheit 72 ein Steuerdruck in der Steuerleitung 97 erzeugt. Mittels der auf die Steuerfläche 94 ausgeübten Kraft kann dann das Federspeicherventil 20 weiter in der Belüftungsstellung gehalten werden. Die Steuerfläche 94 ist hierbei vorzugsweise derart bemessen, dass allein mit der Beaufschlagung der Steuerfläche 94 durch den Steuerdruck in der Steuerleitung 97 das Federspeicherventil 20 in der Belüftungsstellung gehalten werden kann.

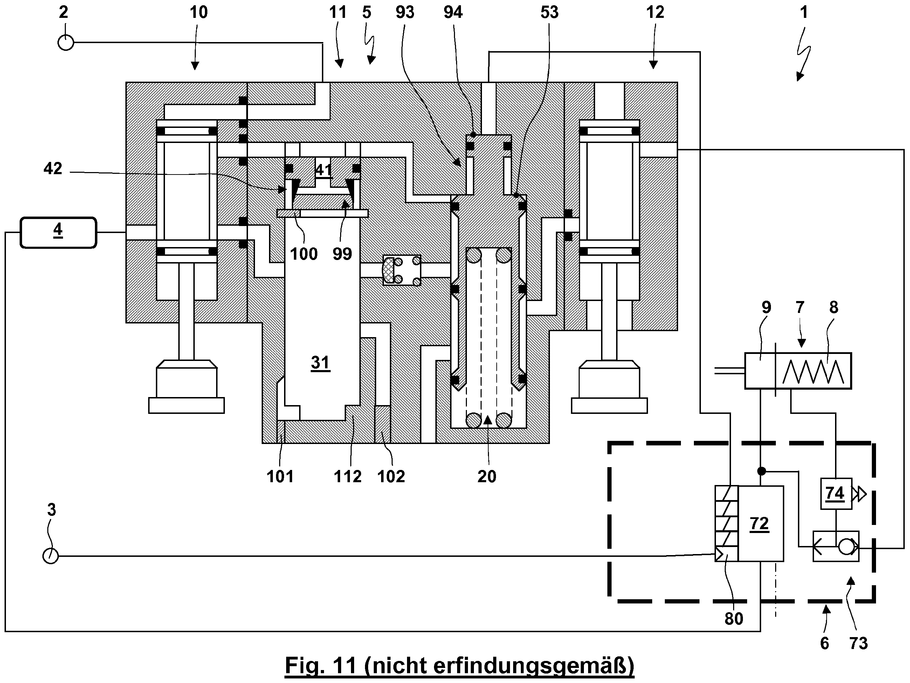

Für das in **Fig. 11** dargestellte Ausführungsbeispiel ist die Ventileinrichtung 5 grundsätzlich entsprechend dem Ausführungsbeispiel gemäß Fig. 10 ausgebildet. Allerdings befinden sich in dem Aufnahmeraum 31 nicht die zur Ausbildung des Notbremsventils 19 erforderlichen Bauelemente. Vielmehr ist in den Aufnahmeraum 31 ein fixierter Einsatz 99 eingesetzt, welcher über einen Sicherungsring 100 gesichert ist und den Kanal 41 ausbildet und das Rückschlagventil 42 beinhaltet. Die Anschlüsse 27 bzw. 28 und 29 bzw. 30 sind hier mit Verschlusselementen 101, 102 verschlossen. Das Federspeicherventil 20 erfüllt grundsätzlich die zuvor erläuterte Funktion. In diesem Fall wird eine Notbremswirkung beispielsweise bei Abriss beider Kupplungsköpfe 2, 3 sowie eine Feststellbremswirkung allein durch das Federspeicherventil 20 herbeigeführt, was einerseits durch die Beaufschlagung der Steuerfläche 53 mit dem Druck des Behälters 4 erfolgt und andererseits durch elektropneumatische Steuerung der Beaufschlagung der Steuerfläche 94 durch die Steuereinheit 72 erfolgen kann. In jedem Fall erfolgt hier aber die Herbeiführung der Notbremswirkung über die Federspeicherbremse.

Für das dargestellte Ausführungsbeispiel ist der Kupplungskopf Bremse 3 unmittelbar, also ohne Zwischenordnung eines Wechselventils 71, mit dem Steueranschluss 80 der Steuereinheit 72 verbunden.

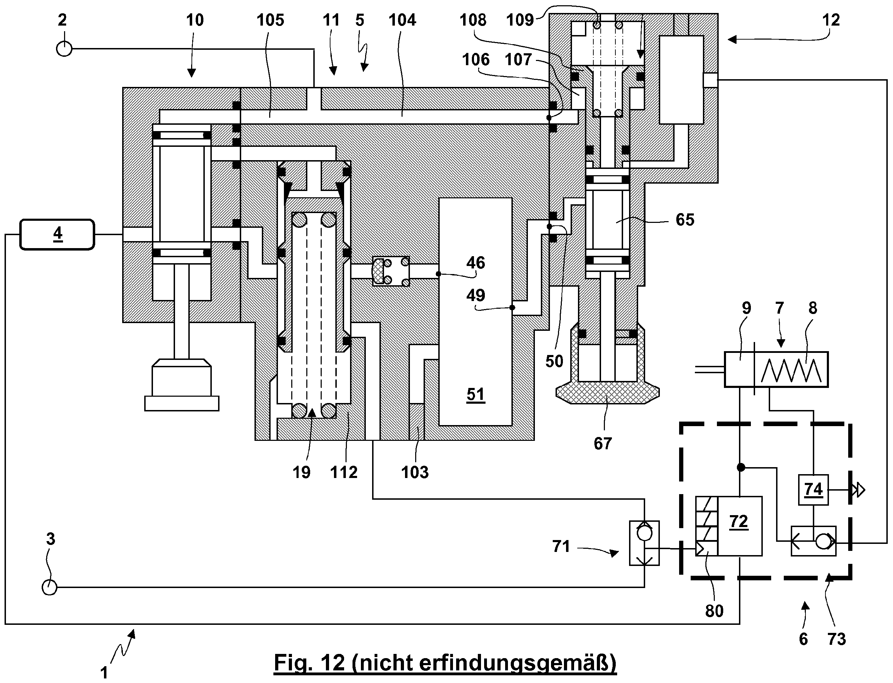

Für das in **Fig. 12** dargestellte Ausführungsbeispiel sind in dem Aufnahmeraum 51 nicht die für die Ausbildung des Federspeicherventils 20 erforderlichen Bauelemente angeordnet. Vielmehr stellt der Aufnahmeraum 51 eine ständige Verbindung zwischen den Anschlüssen 46 und 49 bereit. Der Anschluss 47 bzw. 48 ist hier mit einem Verschlusselement 103 verschlossen. Der Anschluss 45 ist in diesem Fall entfallen, so dass der Aufnahmeraum 51 keinerlei Verbindung mit dem Anschluss 14 des Löseventils 10 hat. In dem Anhängerbremsventil 11 zweigt eine Zweigleitung 104 von der Leitung 105, welche den Kupplungskopf Vorrat 2 mit dem Anschluss 13 des Löseventils 10 verbindet, ab. In diesem Fall verfügt das Anhängerbremsventil 11 zusätzlich zu dem Anschluss 50 über einen weiteren Anschluss 106, über welchen die Zweigleitung 104 mit einer Steuerkammer 107 des Parkventils 12 verbunden ist. Liegt an dem Kupplungskopf Vorrat 2 und damit an dem Anschluss 106 Druck an, ist die Steuerkammer 107 druckbeaufschlagt, was zur Folge hat, dass ein Steuerkolben 108 gegen die Beaufschlagung durch eine Druckfeder 109 in Fig. 12 nach oben bewegt wird. In dieser von Fig. 12 abweichenden Stellung des Steuerkolbens 108 kann der Ventilschieber 65 über den Betätigungsknopf 67 manuell sowohl in die Parkstellung als auch in die Stellung Fahrt bewegt werden, wie dies auch für die vorangegangenen Ausführungsformen der Fall war. Entfällt aber die Druckbeaufschlagung der Steuerkammer 107, überführt die Druckfeder 109 den Steuerkolben 108 in die Fig. 12 dargestellte Stellung, in welcher der Ventilschieber 65 zwingend die Parkstellung einnimmt. Hinsichtlich weiterer Details zu einer derartigen Ausgestaltung des Parkventils 12 mit integrierter Notbremsfunktion über die Federspeicherbremse wird insbesondere auf die Patentanmeldungen DE 10 2007 053 765 A1 und DE 10 2007 053 764 A1 der Anmelderin verwiesen, die zum Gegenstand der vorliegenden Anmeldung gemacht werden und in denen ein derartiges Parkventil näher beschrieben worden ist.

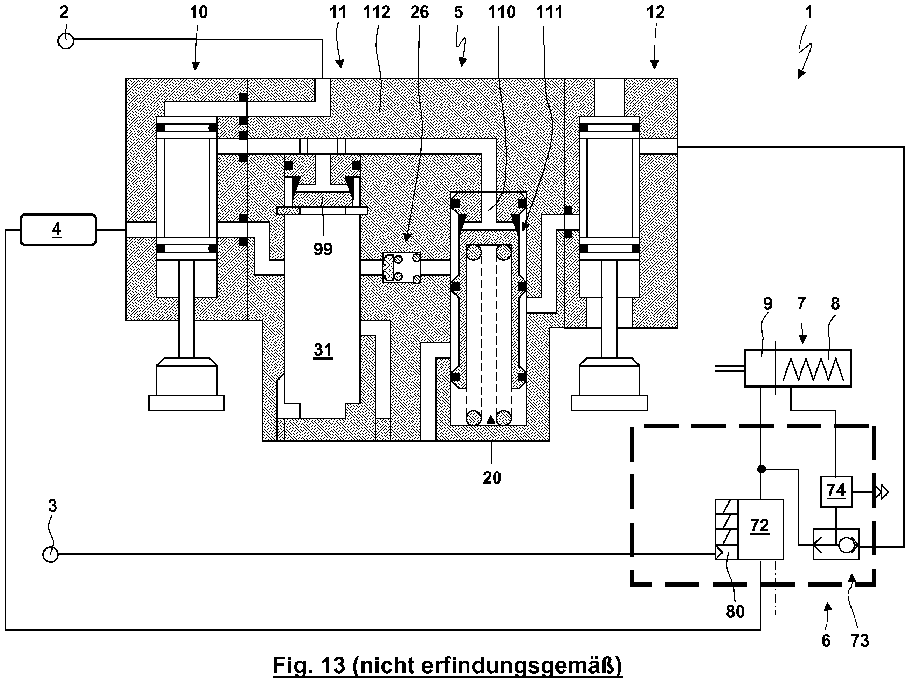

Gemäß **Fig. 13** ist das Anhängerbremsventil 11 ohne die Bauelemente des Notbremsventils 19 ausgebildet - auch hier ist entsprechend Fig. 11 in dem Aufnahmeraum 31 lediglich der Einsatz 99 angeordnet. Das Federspeicherventil 20 ist in diesem Fall grundsätzlich entsprechend Fig. 4 ausgebildet. Allerdings ist hier die Steuerkammer 58 über einen Kanal 110 mit einem in Richtung der Ringkammer 59 öffnenden Rückschlagventil 111 ausgebildet. Eine Umschaltung des Federspeicherventils 20 von der in Fig. 13 wirksamen Entlüftungsstellung in die Belüftungsstellung ist hierbei ausschließlich abhängig von dem Druck an dem Kupplungskopf Vorrat 2. Infolge der Verbindung des Ringraums 59 in der Belüftungsstellung sowohl über das Rückschlagventil 26 mit dem Behälter 4 als auch über das Rückschlagventil 111 mit dem Kupplungskopf Vorrat 2 liegt an dem Anschluss 49 des Federspeicherventils 20 der größere Druck von dem Druck in dem Behälter 4 und dem Druck in dem Kupplungskopf Vorrat 2 an.

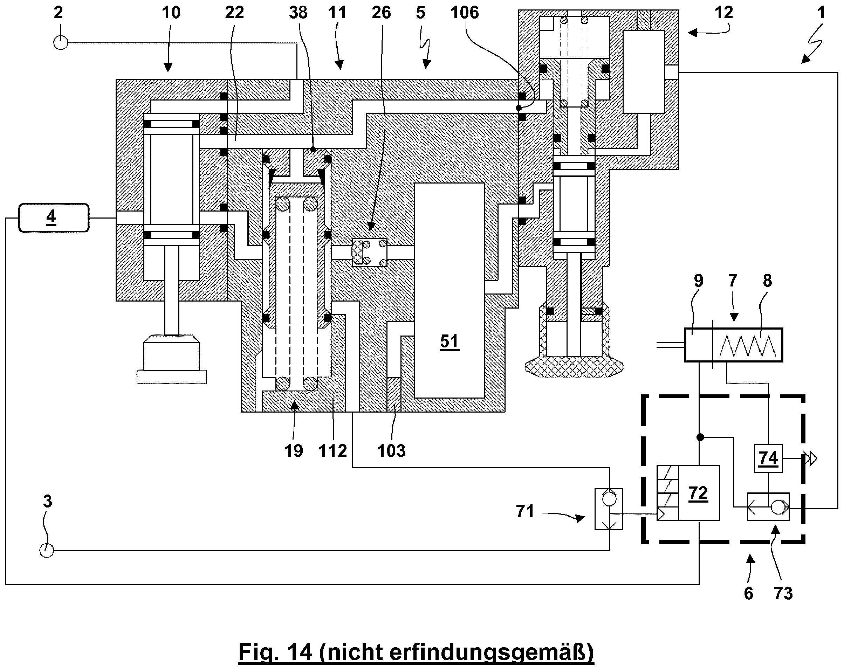

Das in **Fig. 14** dargestellte Ausführungsbeispiel entspricht im Wesentlichen dem Ausführungsbeispiel gemäß Fig. 12. Allerdings sind hier die Steuerkammer 107 und der Anschluss 106 nicht über die Zweigleitung 104 mit dem Kupplungskopf Vorrat 2 verbunden. Vielmehr erfolgt die Beaufschlagung der Steuerkammer 107 des Parkventils 12 über den Anschluss 106, indem der Anschluss 106 in dem Anhängerbremsventil 11 unmittelbar mit der Steuerkammer 38 bzw. dem Anschluss 22 des Anhängerbremsventils verbunden ist.

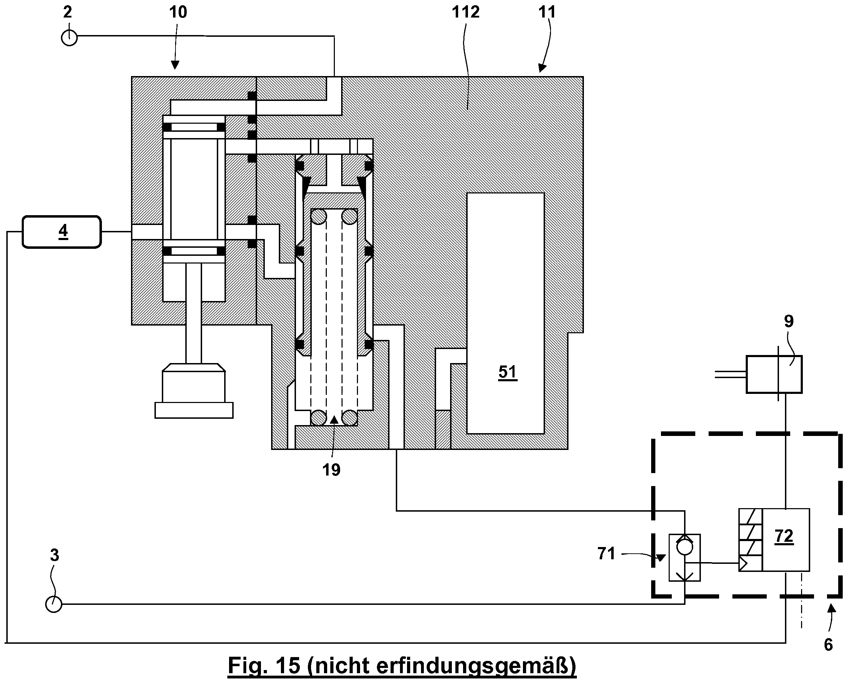

Für das in **Fig. 15** dargestellte Ausführungsbeispiel verfügt das Anhängerbremsventil ausschließlich über das Notbremsventil 19, während das Federspeicherventil durch Entfall der für die Funktion erforderlichen Bauelemente in dem Aufnahmeraum 51 entfallen ist. Die Ventileinrichtung 5 ist hier auch ohne Parkventil 12 ausgebildet. Die Herbeiführung einer Notbremswirkung erfolgt mit der Umschaltung des Notbremsventils 19. In diesem Fall handelt es sich bei der Bremse nicht um Kombi-Bremszylinder, sondern reine Betriebsbremszylinder. Auch für diesen Einsatzfall kann ein Gehäuse 112 entsprechend den zuvor erläuterten Ausführungsformen verwendet werden, sofern die Bauelemente und Anschlüsse für die Bildung des Federspeicherventils 20 entfallen oder verschlossen sind.

In diesem Fall kann auch die weitere Ventileinrichtung 6 vereinfacht ausgebildet sein, indem diese beispielsweise, wie in Fig. 15 dargestellt, lediglich das Wechselventil 71 und die Steuereinheit 72 beinhaltet, nicht jedoch das Wechselventil 73 und das Schnellentlüftungsventil 74.

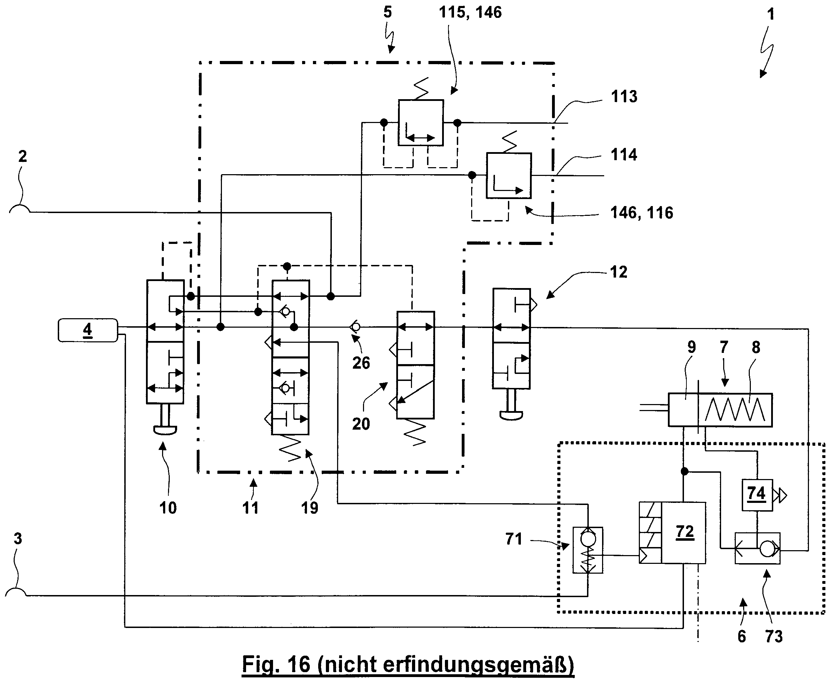

In den Fig. 1 bis 15 sind Druckluftanlagen 1 dargestellt ohne jedwede Wechselwirkung mit einer Luftfederungsanlage, so dass diese Druckluftanlagen und die darin eingesetzten Ventileinrichtungen 5 per se nicht erfindungsgemäß ausgestaltet sind. In den Fig. 16 bis 19 sind hingegen erfindungsgemäße Druckluftanlagen 1 oder erfindungsgemäße Ventileinrichtungen 5 dargestellt, bei welchen in die Ventileinrichtung 5 mindestens ein Ventil integriert ist, welches der Luftfederungsanlage des Anhängers zugeordnet ist. Die in den Fig. 16 bis 18 eingesetzten Ventileinrichtungen 5 sind aber lediglich beispielhaft gewählt. Anstelle der dort eingesetzten Ventileinrichtungen 5, Löseventile 10, Parkventile 12 und/oder Anhängerbremsventile 11 können im Rahmen der Erfindung auch die in den Fig. 2 bis 15 eingesetzten Anhängerbremsventile 11, Löseventile 10, Parkventile 12 oder Ventileinrichtungen 5 im eingesetzt werden, wobei in diesem Fall entsprechend Fig. 16 bis 19 das mindestens eine, der Luftfederungsanlage des Anhängers zugeordnete Ventil ergänzend zu integrieren ist. Es versteht sich, dass auch andere der Luftfederungsanlage zugeordnete Ventile als die dargestellten Ventile, vgl. beispielsweise die Ventile der Luftfederungsanlagen gemäß dem eingangs genannten Stand der Technik, in die Ventileinrichtung integriert werden können, ohne dass hierdurch der Rahmen der vorliegenden Erfindung verlassen wird.

**Fig. 16** zeigt in einer veränderten Darstellungsart, nämlich mit Funktionsbildern der Ventile, eine Ventileinrichtung 5, die grundsätzlich gemäß Fig. 4 ausgebildet ist. Abweichend sind aber hier das Parkventil 12 und das Löseventil 10 separat von dem Anhängerbremsventil 11 ausgebildet und die Leitung 105 ist durch das Anhängerbremsventil 11 hindurchgeführt. Hier findet auch ein priorisiertes Wechselventil 71 in der weiteren Ventileinrichtung 6 Einsatz.

Fig. 16 zeigt die erfindungsgemäße Integration weiterer Bauelemente und Funktionen in die Ventileinrichtung 5 bzw. das Anhängerbremsventil 11. Für das Ausführungsbeispiel gemäß Fig. 16 verfügt die Ventileinrichtung 5 bzw. das Anhängerbremsventil 11 über Ausgangsanschlüsse 113, 114, über welche eine Druckluftversorgung von Verbraucherkreisen des Anhängers erfolgen kann. Hierbei ist mindestens ein Ausgangsanschluss 113, 114 über mindestens ein weiteres Ventil mit mindestens einem Luftfederbalg einer Tragachse oder einer Liftachse pneumatisch verbunden. Der Ausgangsanschluss 113 ist über ein der Luftfederungsanlage zugeordnetes Ventil 146, hier ein Überströmventil 115, insbesondere ein Überströmventil mit begrenzter Rückströmung, verbunden mit dem Kupplungskopf Vorrat 2, was über eine Verbindung mit der Leitung 105 oder einem Eingangsanschluss des Anhängerbremsventils 11, welcher mit dem Kupplungskopf Vorrat 2 verbunden ist, erfolgen kann. Der Ausgangsanschluss 114 ist über ein der Luftfederungsanlage zugeordnetes Ventil 146, hier ein Überströmventil 116 ohne Rückströmung, verbunden mit dem Behälter 4, was beispielsweise erfolgen kann über eine Zweigleitung zwischen den Anschlüssen 23, 24.

Für das in Fig. 16 dargestellte Ausführungsbeispiel ist ein Ventil 146, hier das Überströmventil 115, ohne Zwischenschaltung eines weiteren Ventils mit dem Anschluss der Ventileinrichtung 5 verbunden, welcher mit dem Kupplungskopf Vorrat 2 verbunden ist. Hingegen wird das andere Ventil 146, hier das Überströmventil 116, unabhängig von der Betriebsstellung des Löseventils 10 über das Löseventil 10 aus dem Behälter 4 mit Druckluft versorgt.

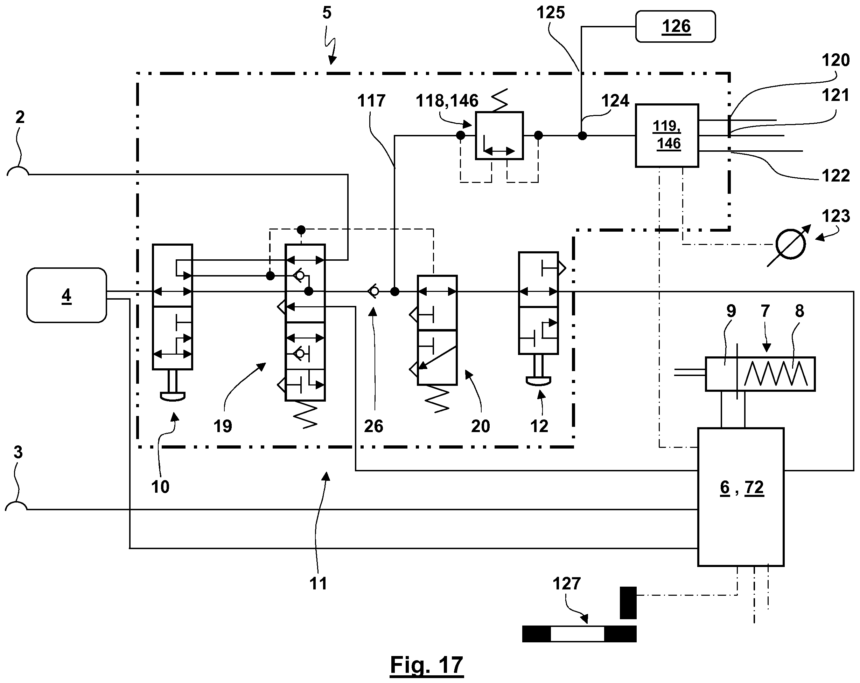

Gemäß **Fig. 17** ist eine singuläre, vorzugsweise modulare Baueinheit mit dem Parkventil 10, dem Anhängerbremsventil 11 und dem Löseventil 12 gebildet, wie dies mit der strich-doppelpunktierten Linie dargestellt ist. Hier zweigt zwischen dem Rückschlagventil 26 und dem Federspeicherventil 20 eine Zweigleitung 117 ab, welche über ein der Luftfederungsanlage 146, hier ein Überströmventil 118 mit begrenzter Rückströmung, mit einer Ventileinheit 119 verbunden ist. Über die Ventileinheit 119 erfolgt die Speisung von Ausgangsanschlüssen 120, 121, 122 für weitere Druckluftverbraucher. Beispielsweise sind den Ausgangsanschlüssen 120, 121, 122 Luftfederbälge von zwei Kreisen sowie ein Liftbalg zugeordnet. Die Ventileinheit 119 und damit die Be- und Entlüftung der Ausgangsanschlüsse 120-122 wird elektrisch gesteuert durch eine Steuereinheit, insbesondere die Steuereinheit 72 der Ventileinrichtung 6. Vorhanden sein kann ein Niveausensor 123, auf Grundlage dessen eine Steuerung der Ventileinheit 119 erfolgt, wobei mit der Be- und Entlüftung der Ausgangsanschlüsse 120, 121, 122 eine Steuerung oder Regelung des Fahrzeugsniveaus erfolgen kann. Abweichend zu Fig. 17 kann das Ausgangssignal des Niveausensors 123 auch der Ventileinrichtung 6 und der Steuereinheit 72 zugeführt werden, welche dann geeignet die Ventileinheit 119 zur Durchführung einer Niveauregelung ansteuert. Zwischen dem Überströmventil 118 und der Ventileinheit 119 zweigt eine weitere Zweigleitung 124 ab, über welche mit einem geeigneten Anschluss 125 der Ventileinrichtung 5 eine Verbindung mit einem weiteren Behälter 126 erfolgt, der bspw. einem weiteren Verbraucherkreis zugeordnet ist.

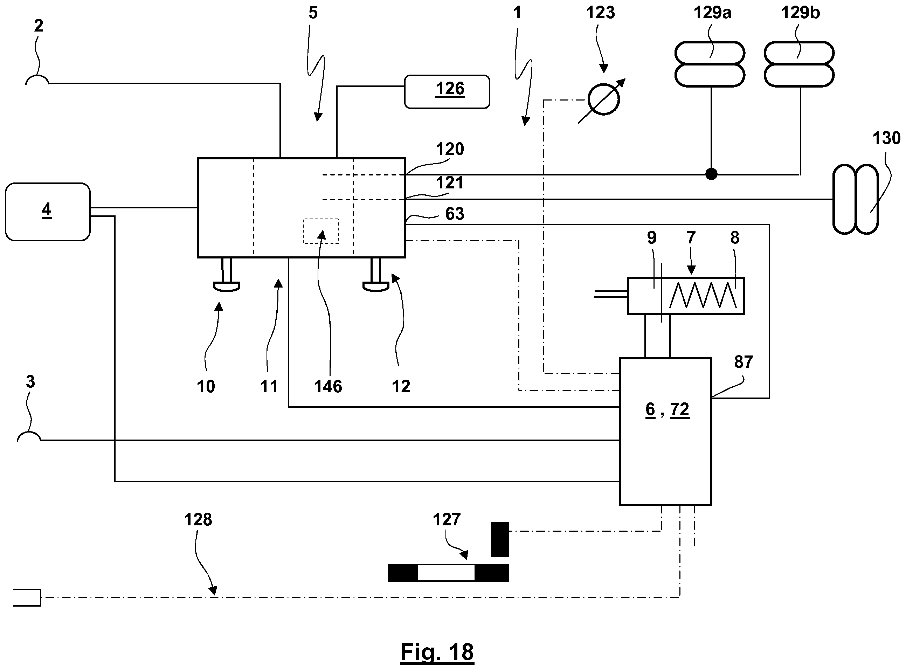

Gemäß dem in **Fig. 18** stark schematisiert dargestellten Ausführungsbeispiel wird der Ventileinrichtung 6 oder der Steuereinheit 72 das Signal eines Rad-Drehzahlsensors 127 sowie ein Signal des Niveausensors 123 zugeführt. Darüber hinaus werden der Steuereinheit 72 Signale über einen CAN oder PLC 128 zugeführt. Der Ausgangsanschluss 120 der Ventileinrichtung 5 ist hier wie dargestellt mit Luftfederbälgen 129a, 129b verbunden, während der Ausgangsanschluss 121 mit einem Liftbalg 130 verbunden ist. Der Anschluss 63 der Ventileinrichtung 5 ist, wie zuvor erläutert, mit der Ventileinrichtung 6 über einen Anschluss 87 verbunden.

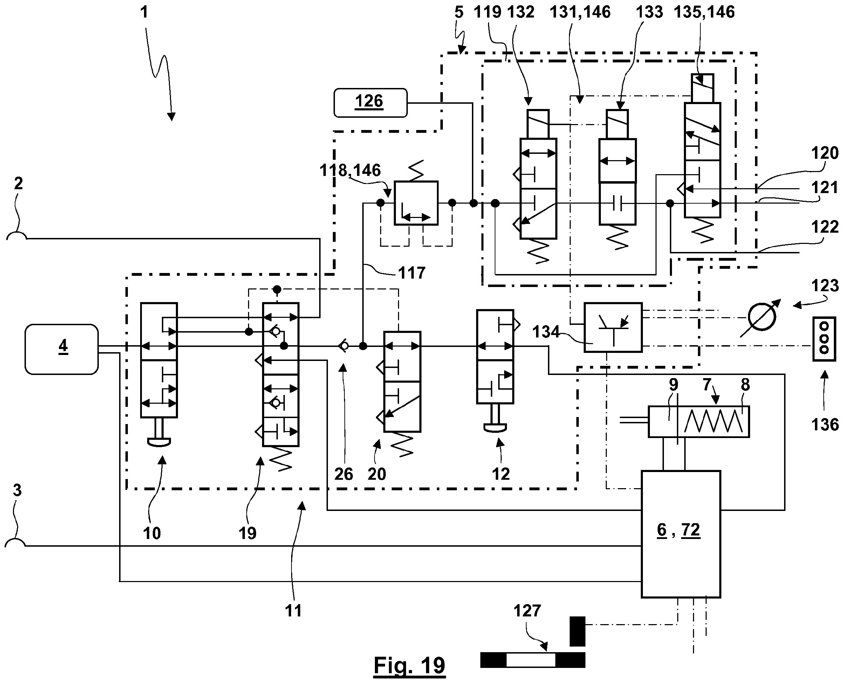

**Fig. 19** zeigt bei im Wesentlichen Fig. 17 entsprechender Ausgestaltung ein Ausführungsbeispiel für die Gestaltung der Ventileinheit 119. Diese besitzt ein Niveauregelventil 131, welches mit der Hintereinanderschaltung eines 3/2-Wegeventils 132 und einem 2/2-Wegeventils 133 gebildet ist. Die Wegeventile 132, 133 sind elektrisch angesteuert durch eine elektronische Steuereinheit 134, welche hier in die Ventileinrichtung 5 integriert ist und die mit der Ventileinrichtung 6, nämlich der Steuereinheit 72 kommuniziert. Der Steuereinheit 134 wird das Niveau der Luftfederungsanlage zugeführt, welches von dem Niveausensor 123 gemessen wird. Erkennt die Steuereinheit 134, dass eine Niveauänderung erforderlich ist, kann diese das Niveauregelventil 131 so ansteuern, dass an den Ausgangsanschlüssen 121, 122 der Druck für die erforderliche Niveauänderung ausgesteuert wird. Das 3/2-Wegeventil 132 besitzt eine (in Fig. 19 nicht wirksame) Belüftungsstellung, welche vorzugsweise mit elektrischer Bestromung eingenommen wird. In der Belüftungsstellung wird der Ausgangsanschluss des 3/2-Wegeventils 132 verbunden mit dem Überströmventil 118 und dem Behälter 126. Hingegen wird in einer Entlüftungsstellung der Ausgangsanschluss des 3/2-Wegeventils 132 entlüftet. Der Ausgang des 3/2-Wegeventils 132 ist verbunden mit dem Eingang des 2/2-Wegeventils. In der Sperrstellung, welche bevorzugt ohne elektrische Bestromung des 2/2-Wegeventils 133 eingenommen wird, ist die Verbindung des Eingangsanschlusses mit dem Ausgangsanschluss 122 abgesperrt, während in der Durchlassstellung des 2/2-Wegeventils 133 der Ausgangsanschluss 122 je nach Stellung des 3/2-Wegeventils 132 be- oder entlüftet werden kann. An den Ausgangsanschluss des 2/2-Wegeventils 133 ist auch ein Liftachsventil 135 angeschlossen, bei welchem es sich bspw. wie dargestellt um ein 5/2-Wegeventil handeln kann. Ausgangsseitig verfügt das Liftachsventil 135 über zwei Anschlüsse, welche mit den Ausgangsanschlüssen 120, 121 verbunden sind. Ein Eingangsanschluss des Liftachsventils 135 ist mit dem Ausgang des 2/2-Wegeventils 133 (und dem Ausgangsanschluss 122) verbunden, während ein weiterer eingangsseitiger Anschluss mit einer Entlüftung verbunden ist und ein dritter eingangsseitiger Anschluss mit dem Ausgang des Überströmventils 118 und dem Behälter 126 verbunden ist. Die Ansteuerung des Liftachsventils 135, welches wie die Ventile 132, 133 als Magnetventil ausgebildet ist, erfolgt über die Steuereinheit 134.

In der in Fig. 19 wirksamen Schaltstellung ist der Ausgangsanschluss 120, welcher zu dem Liftbalg 130 führt, entlüftet, während der einem Luftfederbalg einer tragenden Achse zugeordnete Ausgangsanschluss 121 mit dem Niveauregelventil 131 verbunden ist, so dass eine Niveauregelung für diesen Luftfederbalg erfolgen kann. Hierbei liegt an den Ausgangsanschlüssen 121, 122 derselbe Druck an. Mit Umschaltung des Liftachsventils 135 durch die Steuereinheit 134 wird der dem Liftbalg zugeordnete Ausgangsanschluss 120 belüftet, während der Ausgangsanschluss 121 entlüftet wird.

Zusätzlich kann die Druckluftanlage 1 eine manuelle Bedieneinrichtung 136 besitzen, über welche der Steuereinheit 134 ein Wunsch eines Bedieners nach einem Heben und/oder Senken des Fahrzeugaufbaus übermittelt werden kann, insbesondere für eine Rampenanpassung zum Be- und Entladen des Anhängers. Je nach Signal an der Bedieneinrichtung 136 steuert die Steuereinheit 134 das Niveauregelventil 131 geeignet für ein Heben, Senken oder Halten des Fahrzeugaufbaus an.

In den Figuren ist zu erkennen, dass dasselbe Gehäuse 112 des Anhängerbremsventils 11
- für Ventileinrichtungen einer ersten Teilgruppe einsetzbar ist, welche sowohl mit dem Notbremsventil 19 als auch mit dem Federspeicherventil 20 ausgestattet sind (s. Fig. 4 - 6, 7, 8, 9, 10), sowie
- für Ventileinrichtungen einer zweiten Teilgruppe einsetzbar ist, welche nicht mit dem Notbremsventil 19 und/oder nicht mit dem Federspeicherventil 20 ausgestattet sind (s. Fig. 11, 12, 13, 14, 15).

In einer Art Baukastenprinzip kann damit dasselbe Gehäuse 112 für unterschiedliche Produkte und Einsatzfälle eingesetzt werden.

Vorzugsweise sind/ist das Notbremsventil 19 und/oder das Federspeicherventil 20 nicht als Relaisventile/Relaisventil ausgebildet, sondern als Umschaltventile/Umschaltventil. Ein derartiges Umschaltventil verfügt insbesondere ausschließlich über "binäre" Betriebszustände "belüftet" und "entlüftet", wobei in dem Betriebszustand "belüftet" der von dem Umschaltventil weitergegebene Belüftungsdruckvon einem Behälterdruck abhängig sein kann.

Im Folgenden werden optionale alternative oder kumulative Merkmale der erfindungsgemäßen Ventileinrichtung 5, wie diese mit den Patentansprüchen beansprucht ist, genannt:
- Die erfindungsgemäße Ventileinrichtung 5 kann zusätzlich zu dem Anhängerbremsventil 11 ein manuell betätigbares Parkventil 12 und/oder ein manuell betätigbares Löseventil 10 aufweisen. Zusätzlich kann auch ein Notbremsventil 19 Bestandteil der Ventileinrichtung 5 sein, welches die Druckbeaufschlagung einer Betriebsbremse in Abhängigkeit von einem Druck an einem mit dem Kupplungskopf Vorrat 2 verbindbaren Anschluss 21 steuert. Weiterer Bestandteil der Ventileinrichtung 5 kann ein Federspeicherventil 20 sein, welches die Druckbeaufschlagung einer Federspeicherbremse in Abhängigkeit von einem Druck an einem mit dem Kupplungskopf Vorrat 2 verbindbaren Anschluss 45 und/oder in Abhängigkeit von einem mit dem Behälter 4 verbundenen Anschluss 45 steuert, wobei das Federspeicherventil 20 und das Notbremsventil 19 funktional voneinander unabhängig sein können.
- Möglich ist hierbei, dass das Federspeicherventil 20 und das Notbremsventil 19 unterschiedliche Umschaltdrücke besitzen.
- Möglich ist hierbei auch, dass ein Steuerdruck des Federspeicherventils 20 von einer Betriebsstellung des Notbremsventils 19 abhängig ist.
- Möglich ist weiterhin, dass das Notbremsventil 19 und das Federspeicherventil 20 über parallele Steuerleitungszweige angesteuert werden.
- Möglich ist, dass das Löseventil 10 in einem zu dem Notbremsventil 19 führenden Leitungszweig angeordnet ist.
- Möglich ist auch, dass das Löseventil 10 vor einer Verzweigung 137 zu den beiden Steuerleitungszweigen angeordnet ist.
- Möglich ist darüber hinaus, dass das Löseventil 5 einen mit einem Kupplungskopf Vorrat verbindbaren Anschluss 13, einen Anschluss 14 für den Steuerdruck für das Notbremsventil 19, einen Anschluss 15, der mit einem Behälter verbindbar ist, und einen Anschluss 16, über welchen bei befülltem Behälter 4 eine Versorgung des Notbremsventils 19 mit Druckluft möglich ist, aufweist.
- Möglich ist ebenfalls, dass zwischen einen Anschluss 25 des Notbremsventils 19 und einen Anschluss 46 des Federspeicherventils 20 ein Rückschlagventil 26 zwischengeschaltet ist, welches in Richtung des Federspeicherventils 20 öffnet, aber in Richtung des Notbremsventils 19 sperrt.
- Möglich ist auch, dass die Ventileinrichtung 5 oder ein Anhängerbremsventil 11 der Ventileinrichtung 5 ohne einen Anschluss für einen Kupplungskopf Bremse 3 ausgebildet ist.
- Möglich ist weiterhin, dass ein Steuerraum 38 des Notbremsventils 19 über ein Rückschlagventil 42 mit einem mit dem Behälter 4 verbindbaren Anschluss 23 und/oder einem mit dem Federspeicherventil 20 verbindbaren Anschluss 25 verbunden ist, wobei das Rückschlagventil 42 in Richtung des mit dem Behälter 4 verbindbaren Anschlusses 23 und/oder des mit dem Federspeicherventil 20 verbindbaren Anschlusses 25 öffnet, aber in Richtung des Steuerraums 38 sperrt.
- Möglich ist, dass das Notbremsventil 19 und/oder das Federspeicherventil 20 als Schieberventil ausgebildet ist/sind.
- Möglich ist auch, dass das Federspeicherventil 20 einen Anschluss 45 für einen Steuerdruck, einen Anschluss 46 für eine Verbindung mit dem Notbremsventil 19 und einen Anschluss 49 für eine Verbindung mit dem Parkventil 12 aufweist.
- Möglich ist, dass das Notbremsventil 19 einen Anschluss 21 für einen Steuerdruck, einen Anschluss 23 für eine Verbindung mit dem Behälter 4, einen Anschluss 25 für eine Verbindung mit dem Federspeicherventil 20 und einen Anschluss 27 für eine Ausgabe eines Steuerdrucks für eine Betriebsbremse aufweist.
- Möglich ist, dass das Notbremsventil 20 einen Anschluss 25 besitzt, der sowohl mit einem Steuerraum 58 des Federspeicherventils 20 als auch mit einem Anschluss 46 des Federspeicherventils 20, welcher in einer Stellung des Federspeicherventils 20 über das Federspeicherventil 20 mit dem Parkventil 12 verbunden ist, verbunden ist.
- Möglich ist, dass das Notbremsventil 19 über ein Magnetventil 92 mit einem Steuerraum 58 des Federspeicherventils 20 verbunden ist.
- Möglich ist, dass ein Ventilschieber 52 mit einem Differentialkolben 93 gebildet ist.
- Möglich ist, dass der Differentialkolben 93 eine erste Steuerfläche 53 besitzt, welche mit dem Druck an dem Kupplungskopf Vorrat 2 beaufschlagbar ist, sowie eine zweite Steuerfläche 94 besitzt, welche mit einem von einer Steuereinheit 72 ausgesteuerten Steuerdruck beaufschlagbar ist.
- Möglich ist, dass die Steuereinheit 72, welche den die zweite Steuerfläche 94 beaufschlagenden Steuerdruck aussteuert, auch eine Modulation des Betriebsbremsdruckes herbeiführt.
- Möglich ist, dass ein Wechselventil 71 vorhanden ist, wobei ein Eingang 77 des Wechselventils 71 mit einem Anschluss 27 des Notbremsventils 19 verbunden ist, ein Eingang 75 des Wechselventils 71 mit dem Kupplungskopf Bremse 3 verbunden ist und ein Ausgang 79 des Wechselventils 71 mit einem Steueranschluss 80 einer Steuereinheit 72 für die Aussteuerung eines Betriebsbremsdruckes verbunden ist.
- Möglich ist, dass bei dem Wechselventil 71 der mit dem Kupplungskopf Bremse 3 verbundene Anschluss 75 priorisiert ist.
- Möglich ist, dass ein Wechselventil 73 vorhanden ist, wobei ein Eingang 85 des Wechselventils 73 mit einer Betriebsbremsleitung 83 verbunden ist, ein Eingang 86 des Wechselventils 73 mit einem Anschluss 63 des Parkventils 12 verbunden ist und ein Ausgang 88 des Wechselventils 73 den Druck in einer Federspeicherbremsleitung 90 vorgibt.
- Möglich ist, dass der Ausgang 88 des Wechselventils 73 über ein Schnelllöseventil 74 mit der Federspeicherbremsleitung 90 verbunden ist.

### BEZUGSZEICHENLISTE

- 1: Druckluftanlage
- 2: Kupplungskopf Vorrat
- 3: Kupplungskopf Bremse
- 4: Behälter
- 5: Ventileinrichtung
- 6: Ventileinrichtung
- 7: Kombi-Bremszylinder
- 8: Federspeicherkammer
- 9: Betriebsbremskammer
- 10: Löseventil
- 11: Anhängerbremsventil
- 12: Parkventil
- 13: Anschluss
- 14: Anschluss
- 15: Anschluss
- 16: Anschluss
- 17: Ventilschieber
- 18: Betätigungsknopf
- 19: Notbremsventil
- 20: Federspeicherventil
- 21: Anschluss
- 22: Anschluss
- 23: Anschluss
- 24: Anschluss
- 25: Anschluss
- 26: Rückschlagventil
- 27: Anschluss
- 28: Anschluss
- 29: Anschluss
- 30: Entlüftung
- 31: Aufnahmeraum
- 32: Ventilschieber
- 33: Steuerfläche
- 34: Stirnfläche
- 35: Dichtkante
- 36: Steuerkante
- 37: Steuerkante
- 38: Steuerkammer
- 39: Ringraum
- 40: Ringraum
- 41: Kanal
- 42: Rückschlagventil
- 43: Dichtlippe
- 44: Druckfeder
- 45: Anschluss
- 46: Anschluss
- 47: Anschluss
- 48: Entlüftung
- 49: Anschluss
- 50: Anschluss
- 51: Aufnahmeraum
- 52: Ventilschieber
- 53: Steuerfläche
- 54: Stirnfläche
- 55: Dichtkante
- 56: Steuerkante
- 57: Dichtkante
- 58: Steuerkammer
- 59: Ringraum
- 60: Ringraum
- 61: Druckfeder
- 62: Anschluss
- 63: Anschluss
- 64: Anschluss
- 65: Ventilschieber
- 66: Aufnahmeraum
- 67: Betätigungsknopf
- 68: Steuerkante
- 69: Dichtkante
- 70: Ringraum
- 71: Wechselventil
- 72: Steuereinheit
- 73: Wechselventil
- 74: Schnellentlüftungsventil
- 75: Eingang
- 76: Anschluss
- 77: Eingang
- 78: Anschluss
- 79: Ausgang
- 80: Steueranschluss
- 81: Anschluss
- 82: Anschluss
- 83: Betriebsbremssteuerleitung
- 84: Anschluss
- 85: Eingang
- 86: Eingang
- 87: Anschluss
- 88: Ausgang
- 89: Entlüftung
- 90: Federspeicherbremsleitung
- 91: Anschluss
- 92: Magnetventil
- 93: Differentialkolben
- 94: Steuerfläche
- 95: Stirnfläche
- 96: Anschluss
- 97: Steuerleitung
- 98: Signalleitung
- 99: Einsatz
- 100: Sicherungsring
- 101: Verschlusselement
- 102: Verschlusselement
- 103: Verschlusselement
- 104: Zweigleitung
- 105: Leitung
- 106: Anschluss
- 107: Steuerkammer
- 108: Steuerkolben
- 109: Druckfeder
- 110: Kanal
- 111: Rückschlagventil
- 112: Gehäuse
- 113: Ausgangsanschluss
- 114: Ausgangsanschluss
- 115: Überströmventil
- 116: Überströmventil
- 117: Zweigleitung
- 118: Überströmventil
- 119: Ventileinheit
- 120: Ausgangsanschluss
- 121: Ausgangsanschluss
- 122: Ausgangsanschluss
- 123: Niveausensor
- 124: Zweigleitung
- 125: Anschluss
- 126: Behälter
- 127: Drehzahlsensor
- 128: CAN/PLC
- 129: Luftfederbalg
- 130: Liftbalg
- 131: Niveauregelventil
- 132: 3/2-Wegeventil
- 133: 2/2-Wegeventil
- 134: Steuereinheit
- 135: Liftachsventil
- 136: Bedieneinrichtung
- 137: Verzweigung
- 138: Steuerleitung
- 139: Steueranschluss
- 140: 3/2-Wegeventil
- 141: Anschluss
- 142: Anschluss
- 143: Anschluss
- 144: Rückschlagventil
- 145: 2/2-Wegeventil
- 146: der Luftfederungsanlage zugeordnetes Ventil

## Patentansprüche

1. Als Baueinheit ausgestaltete Ventileinrichtung (5) für eine Druckluftanlage (1) eines Anhängers eines Nutzfahrzeugs
a) mit einem Anhängerbremsventil (11) mit integrierter pneumatisch gesteuerter Notbremsfunktion,
b) wobei in die Ventileinrichtung (5) mindestens ein einer Luftfederungsanlage des Anhängers zugeordnetes Ventil (146) integriert ist und
c) in die Ventileinrichtung (5) ein Parkventil (12) integriert ist oder die Ventileinrichtung einen Anschluss (50) für ein Parkventil (12) besitzt,
**dadurch gekennzeichnet, dass**
d) das oder ein in die Ventileinrichtung (5) integrierte(s) Ventil (146) ein direkt elektronisch gesteuertes Niveauregelventil oder ein elektronisch vorgesteuertes Niveauregelventil (131) ist.

2. Ventileinrichtung (5) nach Anspruch 1, **dadurch gekennzeichnet, dass** ein in die Ventileinrichtung (5) integrierte(s) Ventil ein Liftachsventil ist.

3. Ventileinrichtung (5) nach einem der Ansprüche 1 bis 2, **dadurch gekennzeichnet, dass** ein in die Ventileinrichtung (5) integrierte(s) Ventil (146) ein Überströmventil (115; 116; 118) oder Kreisschutzventil für die Luftfederungsanlage des Anhängers ist.

4. Ventileinrichtung (5) nach einem der Ansprüche 1 bis 3, **dadurch gekennzeichnet, dass** in die Ventileinrichtung (5) eine elektronische Steuereinheit (134) integriert ist, welche das oder ein in die Ventileinrichtung (5) integrierte(s) Ventil (146), welches der Luftfederungsanlage zugeordnet ist, direkt oder mittels Vorsteuerung ansteuert.

5. Ventileinrichtung (5) nach Anspruch 4, **dadurch gekennzeichnet, dass** die elektronische Steuereinheit als ABS- oder EBS-Steuereinheit ausgebildet ist.

6. Druckluftanlage (1) eines Anhängers eines Nutzfahrzeugs mit einer Ventileinrichtung (5) nach einem der Ansprüche 1 bis 3 mit einer außerhalb der Ventileinrichtung (5) angeordneten elektronischen Steuereinheit (72), welche das oder ein in die Ventileinrichtung (5) integrierte(s) Ventil (146), welches der Luftfederungsanlage zugeordnet ist, direkt oder mittels Vorsteuerung ansteuert.

7. Druckluftanlage (1) nach Anspruch 6, **dadurch gekennzeichnet, dass** die elektronische Steuereinheit (72) als ABS- oder EBS-Steuereinheit ausgebildet ist.

## Claims

1. Valve device (5) embodied as a constructional unit for a pressurised air system (1) of a trailer of a commercial vehicle
a) with a trailer brake valve (11) comprising an integrated pneumatically controlled emergency brake function,
b) at least one valve (146) associated with an air suspension system of the trailer being integrated into the valve device (5) and
c) a parking valve (12) being integrated into the valve device or the valve device comprising a port (50) for a parking valve (12),
**characterised in that**
d) the or a valve (146) being integrated into the valve device (5) is a directly electronically controlled level control valve or an electronically pilot-controlled level control valve (131).

2. Valve device (5) of claim 1, **characterised in that** a valve being integrated into the valve device (5) is a lift axle valve.

3. Valve device (5) of one of claims 1 to 2, **characterised in that** a valve (146) being integrated into the valve device (5) is an overflow valve (115; 116; 118) or a circuit protection valve for the air suspension system of the trailer.

4. Valve device (5) of one of claims 1 to 3, **characterised in that** an electronic control unit (134) is integrated into the valve device (5), the electronic control unit (134) directly or by means of a pilot-control controls the or a valve (146) which is integrated into the valve device (5) and which is associated with the air suspension system.

5. Valve device (5) of claim 4, **characterised in that** the electronic control unit is an ABS- or EBS-control unit.

6. Pressurised air system (1) of a trailer of a commercial vehicle comprising a valve device (5) of one of claims 1 to 3 with an electronic control unit (72) arranged outside from the valve device (5), the electronic control unit (72) directly or by means of a pilot-control controlling the or a valve (146) which is integrated into the valve device (5) and which is associated with the air suspension system.

7. Pressurised air system (1) of claim 6, **characterised in that** the electronic control unit (72) is an ABS- or EBS-control unit.

## Revendications

1. Dispositif à soupapes (5), conçu comme un module, pour une installation d'air comprimé (1) d'une remorque d'un véhicule utilitaire,
a) avec une soupape de freinage de remorque (11) avec une fonction intégrée de freinage d'urgence contrôlée pneumatiquement,
b) au moins une soupape (146) correspondant à une installation d'amortissement à air de la remorque étant intégrée dans le dispositif à soupapes (5) et
c) une soupape de stationnement (12) étant intégrée dans le dispositif à soupape (5) ou bien le dispositif à soupapes comprenant un raccordement (50) pour une soupape de stationnement (12),
**caractérisé en ce que**
d) la ou une soupape (146) intégrée dans le dispositif à soupapes (5) est une soupape de régulation de niveau contrôlée directement de manière électronique ou une soupape de régulation de niveau (131) pilotée de manière électronique.

2. Dispositif à soupapes (5) selon la revendication 1, **caractérisé en ce qu'**une soupape intégrée dans le dispositif à soupapes (5) est une soupape d'essieu relevable.

3. Dispositif à soupapes (5) selon l'une des revendications 1 à 2, **caractérisé en ce qu'**une soupape (146) intégrée dans le dispositif à soupapes (5) est une soupape de limitation de débit (115 ; 116 ; 118) ou une soupape de protection de circuit pour l'installation d'amortissement à air de la remorque.

4. Dispositif à soupapes (5) selon l'une des revendications 1 à 3, **caractérisé en ce que**, dans le dispositif à soupapes (5) est intégrée une unité de commande électronique (134) qui commande la ou une soupape (146) intégrée dans le dispositif à soupapes (5), qui correspond à l'installation d'amortissement à air, de manière directe ou au moyen d'un dispositif de pilotage.

5. Dispositif à soupapes (5) selon la revendication 4, **caractérisé en ce que** l'unité de commande électronique est conçue comme une unité de commande ABS ou EBS.

6. Installation d'air comprimé (1) d'une remorque d'un véhicule utilitaire avec un dispositif à soupapes (5) selon l'une des revendications 1 à 3 avec une unité de commande électronique (72) disposée à l'extérieur du dispositif à soupapes (5), qui commande la ou une soupape (146) intégrée dans le dispositif à soupapes (5), qui correspond à l'installation d'amortissement à air, de manière directe ou au moyen d'un dispositif de pilotage.

7. Installation d'air comprimé (1) selon la revendication 6, **caractérisée en ce que** l'unité de commande électronique (72) est conçue comme une unité de commande ABS ou EBS.
